(19) Europäisches Patentamt
European Patent Office
Office européen des brevets

(11) **EP 2 201 330 B1**

(12) **EUROPÄISCHE PATENTSCHRIFT**

(45) Veröffentlichungstag und Bekanntmachung des Hinweises auf die Patenterteilung:
**29.06.2011 Patentblatt 2011/26**

(21) Anmeldenummer: **08841282.0**

(22) Anmeldetag: **24.10.2008**

(51) Int Cl.:
*G01C 15/00* (2006.01)    *G01S 17/08* (2006.01)

(86) Internationale Anmeldenummer:
**PCT/EP2008/009010**

(87) Internationale Veröffentlichungsnummer:
**WO 2009/053085 (30.04.2009 Gazette 2009/18)**

(54) **DISTANZMESSENDES VERFAHREN FÜR EIN REFERENZLINIENPROJIZIERENDES GERÄT UND EBENSOLCHES GERÄT**

DISTANCE-MEASURING METHOD FOR A DEVICE PROJECTING A REFERENCE LINE, AND SUCH A DEVICE

PROCÉDÉ DE MESURE DE DISTANCE POUR UN APPAREIL PROJETANT DES LIGNES DE RÉFÉRENCE, ET APPAREIL CORRESPONDANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.10.2007 EP 07119366**

(43) Veröffentlichungstag der Anmeldung:
**30.06.2010 Patentblatt 2010/26**

(73) Patentinhaber: **Leica Geosystems AG
9435 Heerbrugg (CH)**

(72) Erfinder:
• **HINDERLING, Jürg
CH-9437 Marbach (CH)**
• **KEHL, Anton
CH-9464 Ruethi (CH)**
• **REBHANDL, Wolfgang
A-6850 Dornbirn (AT)**
• **GRAF, Roland
CH-9033 Untereggen (CH)**

(74) Vertreter: **Kaminski Harmann
Patentanwälte Est.
Austrasse 79
9490 Vaduz (LI)**

(56) Entgegenhaltungen:
**EP-A- 1 001 251    US-A- 5 629 756**

**Beschreibung**

Die Erfindung betrifft ein distanzmessendes Verfahren für ein referenzlinienprojizierendes Gerät mit einem elektro-optischen Distanzmesser nach Anspruch 1 und ein referenzlinienprojizierendes Gerät nach dem Oberbegriff von Anspruch 8 sowie ein Vermessungssystem.

In vielen Anwendungen werden sichtbare oder unsichtbare Referenzlinien projiziert, die entweder für das menschliche Auge oder für elektronische Systeme als Referenz dienen, welche auch eine automatische Positionierung oder Maschinenführung erlaubt. Hierbei erfolgt die Erzeugung der Referenzlinien zumeist durch Aufweitung eines Laserstrahls, was insbesondere für gerade Linien möglich ist, oder aber durch Projektion eines Laserpunktes, der entlang einer Trajektorie bewegt wird, was grundsätzlich beliebige Pfade und damit Referenzlinien erlaubt.

Ein Beispiel hierfür sind Rotationslaser, die zur Festlegung einer Ebene mit sichtbarem oder unsichtbarem Laserstrahl dienen und seit vielen Jahren in Verwendung sind, beispielsweise im Bau- oder im Industriegewerbe. Sie sind ein wertvolles Hilfsmittel um Konstruktionslinien entlang horizontaler, vertikaler aber auch definiert schiefen Ebenen zu markieren. Bisherige Rotationslaser haben aber den Nachteil, nur die eine Dimension wie Höhe oder Schiefe zu definieren, was die Effizienz beim Benutzer reduziert.

Andere Systeme sind beispielsweise Laser-Nivelliere mit Nadir- oder Zenit-Strahl, die zur Definition von Lotlinien für Wände, Steigleitungen, Kabelkanäle, Klimaschächte, horizontale Fenstersims, Einbauplatten, Rohre oder Leitungen geeignet sind. Diese Referenzlinien können dabei mit dem Auge oder einem optischen Detektor erfassbar sein, wobei zumeist eine für das Auge sichtbare Markierung erzeugt wird.

Ein Laserlevel projiziert dabei lediglich eine Linie auf dem bestrahlten Objekt, in der Regel in Verbindung mit einer definierten, dem Nutzer sichtbar vorzugebenden Höhe. Die hier verwendete Information ist somit ebenfalls nur eindimensional. Oft sollen jedoch darüber hinaus noch weitere Informationen ermittelt oder visualisiert werden, z.B. besteht bei gewissen Aufgaben der Bedarf, neben der Höhe auch den Abstand (x) oder die laterale Position (x,y) von einem Punkt zu messen, zu überprüfen oder sichtbar vorgegeben zu erhalten, so zum Beispiel bei einer Flachdachsanierung, wo die Senkungen nicht nur in der Höhe sondern auch in der lateralen Position bekannt sein müssen. Zudem stehen bisherigen Systemen zur Projektion von Referenzlinien keine Informationen über die Oberfläche, auf die eine Projektion erfolgt, zur Verfügung. Ohne Kenntnis von Form und Lage der Oberfläche zum System kann eine Projektion zu Verzerrung der projizierten Referenzlinien führen.

Auch erlaubt die fehlende Kenntnis der Oberfläche keinerlei an diese angepasste Markierung. Soll beispielsweise in einem definierten Abstand links und rechts einer Türöffnung Bohrungen angebracht werden, so muss bisher eine separate Messung manuell durchgeführt werden, durch die der seitliche Abstand bestimmt wird. Eine projizierte Referenzlinie dient nur zur Angabe der Höhe dieser Bohrungen. Insbesondere können Systeme des Stands der Technik eine solche Struktur nicht automatisch identifizieren.

Aus dem Stand der Technik allgemein bekannte Systeme zur Erfassung von Abmessungen sind Laserscanner, die Oberflächen Punkt für Punkt entlang eines Messpfades abtasten und vermessen. Allerdings stellen sie keine Funktionalitäten bereit, die eine Referenzlinie vorgeben oder eine sichtbare Marke projizieren können, welche wiederum dem Nutzer eine Interaktion ermöglichen würden. Damit fehlt jegliche Verknüpfung von Oberflächenerfassung und Ausgabe von erfass- oder wahrnehmbaren Hinweisen oder Markierungen. Zudem weisen Scanner aufgrund ihres Anwendungszwecks nur eine relative Präzision der Messungen zueinander auf, eine hochpräzise Vorgabe einer Richtung (Orientierung) zu einem äusseren oder globalen Koordinatensystem ist demgemäss weder erforderlich noch geräteseitig realisiert, so dass vertikale Ablotungen mit solchen Vorrichtungen zu ungenau sind. Auch ist eine präzise Höhenmessung, welche den Anforderungen oder Spezifikationen im Bauwesen genügt, nicht möglich.

Eine Kombination von Entfernungsmess- und Projektionsfunktionalität ist aus der US 2007/0044331 A1 bekannt, in der ein Laserlevel mit Ultraschall-Distanzmesseinheit offenbart wird. Das statische Nivellier erzeugt zwei im Kreuz orthogonal angeordnete Laserfächer. Neben der gemeinsamen Achse dieser beiden Fächer ist der US-Distanzmesser plaziert und misst in diese Richtung den polaren Abstand zum Zielobjekt, wobei die Laservorrichtungen selbst an einem Pendel aufgehängt sind. Die zwei Laserfächer sind damit zum Lot ausgerichtet. Der Distanzmesser ist hingegen am Gehäuse befestigt und zeigt nur bei einer Horizontierung des Instruments exakt in die Richtung der Schnittlinie beiden Laserfächer. Bei anderen Aufstellungen ist der vermessene Anzielpunkt nicht genau bekannt. Die Art und Weise der Distanzmessung ist damit nicht mit der Levelingfunktion verknüpft, wobei durch das Gerät auch beide Funktionen nicht integriert sind. Im Falle von Abstandsmessungen wird das Gerät wie ein unabhängiges, handgehaltenes Distanzwerkzeug verwendet. So muss der Anwender beispielsweise bei einer Volumenmessung das Gerät drei Mal umstellen und in drei unabhängigen, möglichst in senkrechtem Winkel zueinander ausgerichteten Aufstellungen jeweils entsprechende Distanzmessungen durchführen. Eine Levelfunktion oder eine Richtungsmessung werden dabei nicht genutzt.

Ultraschall-Distanzmesser weisen zudem Genauigkeiten im cm-Bereich auf und sind daher für die meisten Bauanforderungen zu ungenau. Besonders nachteilig ist die durch Beugung aufgefächerte Schallwelle, welche am Zielobjekt eine mehrere cm grosse Ausdehnung annimmt. Kanten von Trägern oder Türrahmen können damit nicht vermessen werden.

Die US 2006/0044570 A1 offenbart ein laserbasiertes Positionsbestimmungsgerät. Es umfasst mindestens einen Laseremitter mit einer Rotation in einer horizontalen Ebene mit einem Synchronisationssignal zu einem auf diese Achse bezogen Referenzwinkel. Trifft der Sendestrahl auf einen Detektor, welcher jeweils am zu vermessenden Zielpunkt plaziert ist, so wirkt dieser als positionsempfindlicher Photosensor, mittels welchem die zeitliche Pulslänge und der Phasenwinkel erfasst werden können. Aus Phasenlage und Pulslänge können dann Winkelposition und Radialdistanz zum Detektor bestimmt werden. Die Vorrichtung kann für 2D- und für 3D-Messaufgaben eingesetzt werden. Die Zeitmessung am Zielobjekt wird dadurch gelöst, dass der Laserstrahl moduliert ist. Die Genauigkeit der Abstandmessung hingegen wird hauptsächlich durch die Gleichmässigkeit der Rotationsgeschwindigkeit festgelegt. Bei einer Abweichung des tatsächlich verfahrenen Winkel von beispielsweise lediglich 100 $\mu$rad vom Sollwert über einen Drehwinkel von 45 Grad wird ein relativer Abstandsfehler von 400 $\mu$rad$/\pi$ = 127ppm bewirkt. Bei zu vermessenden Distanzen bis 50m treten damit Fehler von 6,4 mm auf, was z.B. für Aufgaben im Baubereich zu ungenau ist.

Ein System mit einer rundumlaufender Entfernungsmessung für eine mobile Arbeitsmaschine wird in der int. PCT-Anmeldung mit der Anmelde-Nr. PCT/EP2007/007058 beschrieben. Dabei weist eine Positionsbestimmungsvorrichtung einen Sender zur Emission von optischen Sendestrahlen, einen Empfänger sowie um eine vertikale Achse rotierbare Umlenkmittel zum Lenken der Sendestrahlen in horizontale Richtungen auf. Durch die Umlenkmittel wird eine im wesentlichen horizontale Ebene aufgespannt in der auch die Empfangsstrahlen vom Empfänger erfasst werden. Die Sendestrahlen werden nach ihrer Aussendung und nachfolgenden Reflexion an den Referenzobjekten mittels eines Empfängers des Positioniersystems wieder erfasst, wobei aus den Empfangssignalen des Empfängers die Entfernungen zu den Referenzobjekten, insbesondere nach dem Phasenmessprinzip oder dem Prinzip der Pulslaufzeitmessung, bestimmt werden. Das Richten der Sendestrahlen gegen die Referenzobjekte und der reflektierten Strahlen als Empfangsstrahlen gegen den Empfänger erfolgt dabei durch die Umlenkmittel. Die Messung in dieser Ebene erfolgt jedoch aus der Bewegung und zu einigen wenigen, typischerweise vier, kooperativen Zielen, d.h. Reflektoren, die an bekannten Positionen plaziert werden. Durch diese Messungen wird die relative Lage der messenden Einheit zu diesen kooperativen Zielen bestimmt, so dass aus der Kenntnis von deren Position auf die der bewegten Einheit geschlossen werden kann. Der dort beschriebene Entfernungsmesser zur Bestimmung von Punkten auf nicht-kooperativen Oberflächen weder vorgesehen noch geeignet. Da er nach dem herkömmlichen Phasenmessprinzip arbeitet, ist er für die bei der Projektion einer Referenzlinie erforderlichen Winkelgeschwindigkeiten zu langsam. Bei den hierfür erforderlichen hohen Geschwindigkeiten würde der Laser während einer Messung am Zielobjekt eine Verschmierung der Messung erfahren. Zudem ist geräteseitig ein grosser Platzbedarf erforderlich, da bei der dargestellten biaxialen Anordnung von Sender und Empfänger letzterer um den Sender herum rotiert. Schliesslich erfolgt keine Projektion von durch das Auge oder Detektoren erfassbaren Markierungen, die eine Führung des Nutzers oder eine Referenzierung durch eine weitere Vermessungs-Einheit erlauben.

Aus der EP 1 001 251 ist ein Laserscanner mit Entfernungsmess- und Zielverfolgungsfunktion bekannt, der eine Einrichtung zur Erzeugung eines sichtbaren Laserstrahls und eine Sendeoptik mit um zwei nicht parallele Achsen dreh- und steuerbaren Ablenkmittel aufweist. Die Ansteuerung der Ablenkmittel erfolgt punktaufgelöst mittels Stellmotoren und Winkelgeber nach einem vorgegebenen beliebigen Muster. Dadurch wird einerseits eine Projektion beliebiger Punkt-, Linien- oder Flächenmuster an z.B. eine Raumwand und andererseits eine exakte Raumvermessung sowie Strahlnachführung in Bezug auf sich bewegende Objekte ermöglicht. Allerdings erfolgt keine automatisierte und fortlaufende Messung von Punkten im Pfad des projizierten Muster. Zudem bedingt die scannende Messung von Punkten bereits während eines einmaligen Durchlaufens des Scanpfades, dass bei jeder dieser Messungen eine vollständige Bestimmung der Distanz mit der gewünschten bzw. erforderlichen Genauigkeit erfolgen muss. Sind die Umweltbedingungen zu schlecht, so müssen Hilfsmittel verwendet werden oder aber eine Messung kann nicht stattfinden. Das Messen auf schwach zurückstreuende Oberflächen oder auf Objekte, die zeitweise verdeckt sind ist somit nicht möglich. Der letztere Punkt ist jedoch insbesondere im Baugewerbe von Bedeutung, wenn beispielsweise ein referenzlinienprojizierendes Gerät in einem Raum betrieben wird und der Nutzer ständig den bewegten Strahl mit seinem Körper unterbricht, so dass eine einmalige Vermessung nur unvollständige Ergebnisse liefert.

In der US 5,629,756 wird ein Rotationslaser beschrieben, mit dem unter Einsatz eines speziellen Reflektorelements an der Wand die Distanz zur Wand messbar ist. Diese Distanz wird verwendet, um die Laserlinie auf die Wand zu fokussieren, sodass eine klar erkennbare, scharfe Linie an der Wand erzeugt wird. Zusätzlich wird vorgeschlagen, die gemessene Distanz zur Anpassung der Rotationsgeschwindigkeit zu verwenden, da - im Falle einer Distanz zur Wand von beispielsweise mehr als 30m - die projizierte Laserlinie bei geringeren Rotationsgeschwindigkeiten so besser erkennbar ist. Auch diese Lösung ist nicht in der Lage, unter allen im normalen Betrieb herrschenden Bedingungen auf natürliche Oberflächen, d.h. auch ohne Nutzung eines Reflektors, zu messen.

Die Veröffentlichungsschrift WO 96/17222 offenbart ein Verfahren und eine Einrichtung zur lichtoptischen Vermessung von Montageflächen mit Visualisierung von festlegbaren Fixpunkten für Montagehilfsmittel unter Berücksichtigung der Projektionsgeometrie mittels triangulativer Entfernungsmessung.

Die EP 1 024 343 offenbart einen Rotationslaser mit einer Entfernungsmesseinheit und einem Scann-Mittel, welches das Projektionslicht ablenkt.

Der Erfindung liegt somit die Aufgabe "zugrunde, ein verbessertes entfernungsmessendes und referenzlinienprojizierendes Gerät bzw. ein entsprechendes Verfahren bereitzustellen.

Eine weitere Aufgabe besteht in der Erhöhung der Messgenauigkeit und/oder der Erweiterung des Einsatzbereiches der Entfernungsmessfunktionalität solchen Verfahrens oder Gerätes.

Eine weitere Aufgabe besteht in der Bereitstellung eines solchen Verfahrens oder Gerätes, das automatisch fortlaufende Informationen über die Oberfläche, auf welche die Projektion erfolgt, ermittelt, insbesondere um die Projektion entsprechend anzupassen oder einen Bearbeitungsfortschritt zu überwachen.

Diese Aufgaben werden durch die Verwirklichung der kennzeichnenden Merkmale der unabhängigen oder abhängigen Ansprüche gelöst.

Bei einem erfindungsgemässen distanzmessenden Verfahren bzw. einem ebensolchen Gerät werden referenzlinienprojizierende und distanzmessende Funktionalität integriert, indem die zur Projektion genutzte Emission oder zumindest deren Strahlgang ebenfalls für eine Entfernungsmessung genutzt wird. Hierbei wird anhand eines optischen Messstrahls, der durch einen elektronischen Distanzmesser emittiert wird, ein definierter Messpfad durchlaufen bzw. abgefahren, d.h. der Messstrahl wird derart geführt, dass die Trajektorie seiner Projektion diesem definierten Messpfad und der zu projizierenden Referenzlinie entspricht. Dabei wird zu mindestens einem Punkt des Messpfades, insbesondere zu einer Vielzahl von Punkten des Messpfades, eine Distanz bestimmt, wobei erfindungsgemäss innerhalb eines Messvorgangs, d.h. für das Bestimmen der Distanz, der Messpfad mindestens einmal wiederholt, insbesondere vielfach wiederholt, durch die Projektion des Messstrahls abgefahren bzw. durchlaufen wird. Im Gegensatz zu abtastend bewegten Systemen wird somit der gleiche Pfad mehrfach durchlaufen und somit bei winkelsynchronen Distanzmessungen die Profilpunkte mehrfach abtastet, was sowohl eine Verbesserung der Messungen durch Akkumulation oder Mittelwertbildung als auch eine fortlaufende Überwachung der Distanzen und damit eine Analyse von Veränderungen erlaubt. Geräteseitig erfolgt erfindungsgemäss eine Integration eines hochempfindlichen Distanzmessers in die projizierende Einheit, wobei vorzugsweise die Strahlgänge von Messstrahl und Projektionsstrahl koaxial gekoppelt sind.

Durch das wiederholte Abfahren des definierten Messpfades mit der Projektion des Messstrahls können bei jedem Durchlauf Distanzgrössen jeweils für Punkte des Messpfades ermittelt und für die Bestimmung der Distanzen zu den Punkten diese Distanzgrössen jeweils akkumuliert, d.h. gesammelt, und insbesondere gemittelt werden. Das mehrfache Durchlaufen des Messpfades und die dabei erfolgende Datenaufnahme erlaubt das Ermitteln der Distanz zu vielen Punkten des durchlaufenen Pfads mit hoher Messrate, so dass beispielsweise ein 3-D-Modell des kompletten Pfades abgeleitet werden kann, was z.B. das hochpräzise und automatische Erstellen des Grundrisses eines Raums ermöglicht.

Grundlage hierfür ist das mehrfache winkelsynchrone Durchlaufen ein- und desselben Messpfades, der damit einen wiederholten Empfang von Messstrahlung eines Messpunktes und damit deren Akkumulation erlaubt. Diese Akkumulation kann dabei sehr strahlungsnah, d.h. beispielsweise als Ladungsträgerakkumulation in einem photosensitiven Element, oder auf der Ebene der Signalverarbeitung, z.B. durch Speichern und Aufaddieren digitalisierter Werte, erfolgen. Hierbei können Distanzmesswerte grundsätzlich entweder bei jedem Durchlauf bestimmt und laufend ausgegeben oder nachfolgend weiterverarbeitet, z.B. gemittelt werden, oder aber die Distanzbestimmung erfolgt erst nach einer Mehrzahl von Durchläufen, z.B. anhand der bis dahin für jeden Messpunkt akkumulierten Ladungsträger oder aggregiertem Signal. Für den Fall einer laufenden Distanzausgabe eignen sich sogenannte IIR-Filter (infinite impulse response), diese digitalen Filter sind besonders für schnelle Verarbeitung und Verbesserung von Messfolgen geeignet.

Die Messrate und damit die Auslegung der entfernungsmessenden Einheit sind hierbei abhängig von der Winkelgeschwindigkeit beim Durchlaufen der Trajektorie, wobei diese wiederum von der Erfassbarkeit durch das menschliche Auge oder einen elektronischen Detektor vorgegeben wird. Die mit solchen Bedingungen verbundenen typischen Messraten liegen dabei im Bereich von 1kHz bis einige 1000kHz. Weitere zu realisierende Eigenschaften des Systems sind eine radiale Messgenauigkeit von unter 3 mm, eine laterale Auflösung entlang des Messpfades von weniger als 5 mm auf 20 m und eine Einsatzentfernung von mindestens bis zu 50 m.

Laufzeitmesser des Stands der Technik sind zwar einkanalig und damit koaxial ausführbar, gängige Realisierungen mit mm-Genauigkeit haben aber durchwegs langsame Messgeschwindigkeit im Hz-Bereich, da die Genauigkeit erst durch Mittelung über eine grosse Zahl von Laserschüssen erreicht wird.

Bekannt sind auch schnelle Phasenmesser bis zu einigen 100MPts/sec, jedoch sind solche Vorrichtungen anfällig auf Kanalübersprechen, insbesondere bei koaxial angeordneten Strahlführungen. Bei biaxialen oder morphologisch getrennten Messstrahlführungen kann ein solcher Distanzmesser grundsätzlich eingesetzt werden.

Ein für den erfindungsgemässen integrierten Ansatz geeigneter Distanzmesser wird im folgenden dargestellt. Er benutzt dabei einen Sende- und einen Empfangstrahl in koaxialer Anordnung. Dabei unterscheidet sich das Messprinzip sowohl vom klassischen Laufzeitmesser als auch vom Phasenmesser. Zwar wird die Distanz wie bei einem Laufzeitmesser von einer Messung der Laufzeit abgeleitet, hingegen gleichen die radiometrischen Grössen wie Laserleistung und Modulationsfrequenz eher denjenigen eines Phasenmessers. Ein solcher Distanzmesser ist in der Lage mit einer Rate von einigen kHz bis zu wenigen MHz, insbesondere bis zu etwa einem MHz, die Distanz mm-genau zu vermessen, ohne die Grenzwerte der Laserklasse 3R zu überschreiten.

Die Integration eines solch hochempfindlichen Distanzmessers kann mit einem Winkelsensor kombiniert werden. Damit können lokale Koordinaten in einer Ebene oder auf einem Kegel bestimmt werden. Der Winkelsensor oder Drehgeber erfasst dabei den Rotationswinkel des projizierten Referenzstrahls. Mit den Daten des Winkelgebers und des Distanzmessers lassen sich mit hoher Präzision beispielsweise die Koordinaten von markierten, identifizierbaren Strukturen wie zum Beispiel Türweite oder Fensterbreite, oder auch von reflektierenden Objektmarken bestimmen.

Ist die entfernungsmessende Einheit in einem Grade-Laser, das heisst ein Rotationslaser mit zur Lotrichtung einstellbarer Neigungsebene, eingebaut, so können die lokalen Koordinaten (x,y,z) erfasst werden, dies zumindest in einem begrenztem Grade- oder Neigungsbereich.

Neben den Applikationen in horizontaler oder definiert schiefer Lage kann das erfindungsgemässe System auch in einer sogenannten Lay-down Variante realisiert sein. In dieser Ausführungsform liegt das referenzlinienprojizierende Gerät auf der Seite und ist auf einem Drehtisch plaziert, damit das Gerät um eine, mit einem weiteren Winkelsensor versehene, Stehachse rotieren kann. Die Rotation um die Stehachse wird vorzugsweise in Schritten oder Intervallen ausgeführt, was den Vorteil einer mehrmaligen Aufnahme des jeweiligen Oberflächenprofils und somit einer Aggregation der Punktkoordinaten hat. Durch das schrittweise Verdrehen um die Stehachse kann der gesamte Raum abgetastet werden. Diese Ausführungsform hat also die Funktion eines Punktwolken erzeugenden Scanners aber im Vergleich zu den herkömmlichen Lösungen mit niedriger Komplexität.

Die Integration eines solchen Distanzmessers in ein referenzlinienprojizierendes mit Winkelgeber ausgerüsteten System erlaubt nun auch die Steuerung der Projektion anhand der ermittelten Informationen, wie z.B. der Oberflächentopographie. Durch die bekannten Objektdaten in einer Drehebene können zum Beispiel Positionen von Bohrlöchern visuell angezeigt werden, sowie durch Verwendung in einem Grade-Laser auch Positionen von Absteckpunkten unter und über der horizontalen Referenzlinie markiert werden. Um Punkte oder begrenzte Linienbereiche erkennbar zu machen, wird der Projektionsstrahl lediglich in den vorgesehenen, abzusteckenden Bereichen eingeschaltet.

Insbesondere im Fall eines referenzlinienprojizierenden Systems mit Scannerfunktionalität, d.h. der Fähigkeit zum abtastenden Vermessen zusammenhängender zweidimensionaler Abschnitte, kann die Trajektorie nach einer Bestimmung des Oberflächenprofils an eine gekrümmte Oberfläche so angepasst werden, dass deren Form der unverzerrten Kontur des abzusteckenden Körpers oder Objekts entspricht. Zudem können nach der Identifikation von Strukturen auch auf diese bezogenen Informationen bereitgestellt oder projiziert werden. Beispielsweise kann nach der abtastenden Vermessung entlang des Messpfades ein Fenster identifiziert werden. Nachdem das System über diese automatisch ermittelten Informationen über die Position, Form und Lage des Fensters verfügt, können z.B. Markierungen in einem bestimmten Abstand von der Fensteröffnung automatisch projiziert werden.

In ähnlicher Weise kann ein erfindungemässes Gerät bzw. Verfahren auch zur Bauabnahme oder zur Verifikation von Sollgrössen genutzt werden, indem selbsttätig Profile von Oberflächen aufgenommen und mit vorhandenen Sollprofilen verglichen werden. Beispielsweise können so Grundrisse von Räumen durch Vermessen von Wänden oder Raumhöhen durch Aufnahme von Seitenprofilen überprüft werden.

Zudem sind Ausführungsformen des Gerätes realisierbar, die auch in der Lage sind die 3D-Position des Laserlichtflecks am Objekt oder die Koordinaten eines reflektierenden Zielmarkierobjektes zu vermessen. Dies erfordert entweder eine präzise Erfassung der beiden Emissionswinkel, Azimut und Elevation oder aber eine direkte Messung der Lage des Messpunktes, was beispielsweise durch Verwendung eines kooperativen Zielobjekts mit eigener Messfunktionalität bewirkt werden kann. Handelt es sich beispielsweise beim reflektierenden Zielmarkierobjekt um einen sogenannten "Smart Receiver", also einen intelligenten Empfänger oder Reflektor mit eigener Entfernungsmessfunktion oder aber zumindest der Befähigung der Bestimmung der eigenen Höhenposition, so kann auch die Höhenlage des Reflektors als Messpunkt in die Koordinatenvermessung einbezogen werden.

Optional kann auch eine Koordinate eines beliebigen Punktes in der Verlängerung der Achse der intelligenten Zielmarkiereinheit bestimmt werden. Diese Bestimmung erfolgt vorzugsweise berührungslos, z.B. durch einen Triangulationssensor oder eine eigenen Laufzeit- oder Phasenmesser oder aber auch mechanisch, beispielsweise durch einen ausziehbaren Taster.

Aus der Vermessung der Oberflächentopographie können schliesslich auch Flächen- oder Volumenbestimmungen vorgenommen werden, wobei gegebenenfalls auch weitere Informationen über die vermessenen Objekte einbezogen werden. So kann aus dem Profil eines Rohres auf dessen Querschnitt oder bei Kenntnis der Länge auch auf dessen Volumen geschlossen werden. Ein anderes Beispiel ist die Erfassung und Vermessung der Wände eines Raumes. Aus deren Geometrie kann automatisch die Fläche des Raumes bestimmt und damit beispielsweise der Bedarf an Bodenbelag berechnet werden.

Das erfindungsgemässe Verfahren und das erfindungsgemässe Gerät werden nachfolgend anhand von in den Zeichnungen schematisch dargestellten konkreten Ausführungsbeispielen rein beispielhaft näher beschrieben. Im Einzelnen zeigen:

Fig. 1 eine schematische Darstellung des erfindungsgemässen Verfahrens;

Fig. 2 die schematische Darstellung der Fig.1 in Draufsicht;

Fig. 3 eine schematische Darstellung des Entfernungsmessprinzips für ein erfindungsgemässes Verfahrens;

Fig. 4 ein schematisches Blockschaltbild zur Durchführung des Entfernungsmessprinzips;

Fig. 5 eine Darstellung des Signalverlaufs für ein Anwendungsbeispiel des Entfernungsmessprinzips;

Fig. 6 eine schematische Darstellung eines ersten Ausführungsbeispiels des erfindungsgemässen Gerätes;

Fig. 7 die schematische Darstellung eines ersten Anwendungsbeispiels des erfindungsgemässen Verfahrens mit einem kooperativen Ziel;

Fig. 8 die schematische Darstellung eines zweiten Anwendungsbeispiels des erfindungsgemässen Verfahrens mit einem kooperativen Ziel;

Fig. 9 eine schematische Darstellung eines zweiten Ausführungsbeispiels des erfindungsgemässen Gerätes;

Fig. 10 die schematische Darstellung eines Anwendungsbeispiels für das zweite Ausführungsbeispiel des erfindungsgemässen Gerätes und

Fig. 11 eine schematische Darstellung eines dritten Ausführungsbeispiels des erfindungsgemässen Gerätes mit natürlich reflektierenden Zielobjekten.

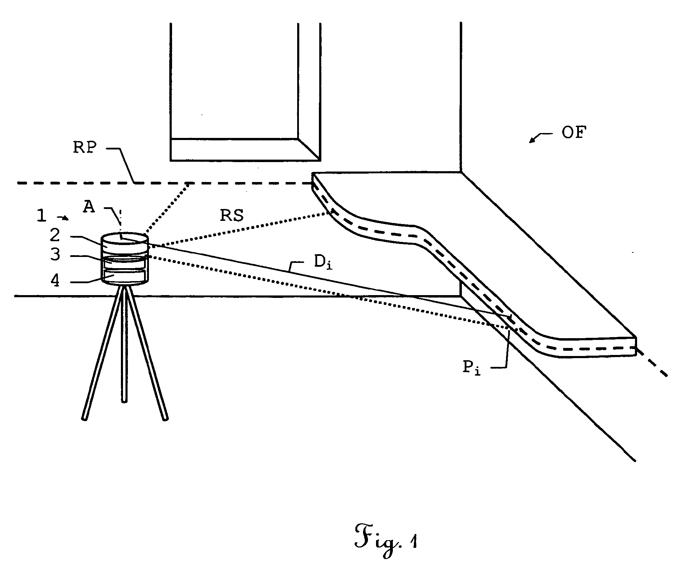

Fig.1 zeigt eine schematische Darstellung des erfindungsgemässen distanzmessenden Verfahrens für ein referenzlinienprojizierendes Gerät 1 mit einem elektro-optischen Distanzmesser. Das Gerät 1 erzeugt optische Strahlung, die durch eine optisch transparente Öffnung oder Haube 2 als optischer Referenzstrahl RS ausgesendet und entlang eines definierten Referenzpfades RP geführt wird, wobei wenigstens ein Teil des Referenzpfades RP bei dessen Durchlaufen durch das menschliche Auge und/oder Detektoren als Referenzlinie erfassbar ist. Die Führung der Emission erfolgt durch ein Strahlumlenkmittel 3 als Mittel zum Lenken des Referenzstrahls RS, das durch einen Antrieb 4 bewegt wird.

Auf die durch den Referenzstrahl RS erzeugte Referenzlinie können dann weitere Bearbeitungsvorgänge hinsichtlich ihrer Positionierung bezogen werden, z.B. indem der Abstand zu einer sichtbar auf eine Oberfläche OF projizierten Referenzlinie gemessen wird. Neben der sichtbaren oder durch einen Detektor erfassbaren Projektion auf eine Oberfläche ist aber auch eine Projektion möglich, die von einem Detektor beim Auftreffen auf diesen erfasst wird. In beiden Fällen weist die Referenzlinie mehr als nur einen einzigen Punkt auf, so dass ein Verlauf der Referenzlinie erfassbar wird.

Erfindungsgemäss erfolgt eine Entfernungsmessung zu mindestens einem Punkt $P_i$ des Referenzpfades RP, insbesondere aber zu vielen Punkten $P_i$, z.B. wenn diese zur Abtastung eines Abschnitts des Referenzpfades RP dienen. Das Messprinzip basiert hierbei auf dem Aussenden eines zum Referenzstrahl RS parallelen oder koaxialen Messstrahls oder dem Verwenden des Referenzstrahls RS als Messstrahl und einem nachfolgenden Empfangen von Anteilen des zurückgeworfenen Messstrahls und Ableiten eines Signals aus diesen Anteilen. Hierbei können die entsprechenden Signale mit einer Messrate von 1kHz oder mehr aufgenommen werden. Synchron zur Distanzmessung erfolgt jeweils eine Winkelmessung bzw. Winkelbestimmung der Ablenkrichtung zum Punkt $P_i$.

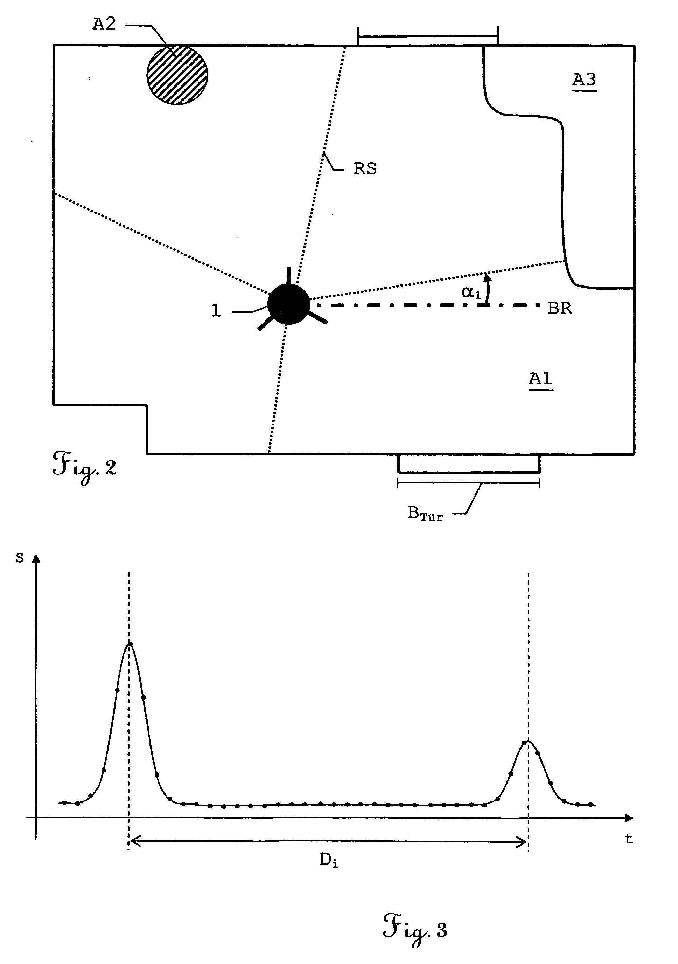

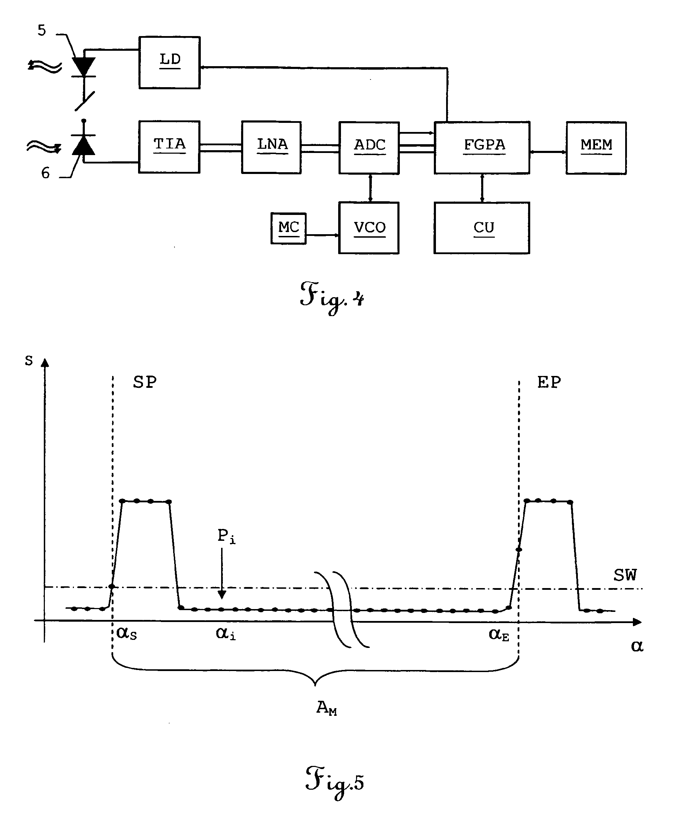

Das Bestimmen der Distanz $D_i$ zu dem mindestens einen Punkt $P_i$ basiert dabei auf der unten in Fig. 3 und 4 dargestellten Modulation und Auswertung des Signals, wobei das Führen entlang des Referenzpfades RP auch wiederholt werden kann. Bei jedem Durchlaufen des Referenzpfades RP wird für mindestens einen Punkt $P_i$ jeweils eine Distanz $D_i$ oder eine distanzbezogene Grösse, wie z.B. die Signalform oder Phase, pro Winkelstellung des Empfängers ermittelt. Nach einigen Durchläufen kann dann aus den distanzbezogenen Grössen die Distanz $D_i$ ermittelt werden. Damit können durch das wiederholte Durchlaufen des Referenzpfades RP die für den mindestens einen Punkt $P_i$ empfangenen Anteile des Messstrahls akkumuliert und/oder deren zugeordnete Signale aggregiert werden.

Im Fall des hier dargestellten Rotationslasers als referenzlinienprojizierendes Gerät 1 wird durch die Rotationsgeschwindigkeit des Referenzstrahls RS eine ständige Abtastung des Referenzpfades mit einer Vielzahl von wiederholenden Durchläufen der gleichen Bahn und dabei der Winkelauflösung entsprechend einer wiederholten Vermessung der identischen Punkte möglich, wobei der Referenzpfad RP definiert und variierbar vorgebbar ist. Bei einem Rotationslaser kann beispielsweise die Rotationsebene durch Verändern der Lage der Achse A gekippt werden, so dass entsprechend schräge Ebenen (Grade) realisierbar sind. Mit entsprechenden Steuerungsmitteln können jedoch auch Freiform-Figuren als Referenzlinien projiziert bzw. entfernungsmessend abgetastet werden. Um die referenzlinienprojizierende Funktion zu realisieren, kann das Führen entlang des Referenzpfades RP mit einer derartigen Geschwindigkeit erfolgen, dass während des Durchlaufens der Referenzpfad RP für das menschliche Auge in seiner Gesamtheit gleichzeitig wahrnehmbar ist. Im Fall des Rotationslasers sieht der Nutzer dann eine ringsum an die Wand projizierte, durchgehende Linie. Hier weist die emittierte Strahlung vorteilhafterweise eine Wellenlänge im sichtbaren Bereich aufweist, jedoch kann grundsätzlich aber auch induzierte Fluoreszenz oder ähnliche Effekte genutzt werden. Der Messstrahl kann kollimiert werden und einen Strahlquerschnitt mit einem Durchmesser von 5 mm oder weniger aufweisen.

Im in Fig.1 dargestellten Beispiel wird der Rotationslaser so positioniert, dass die Höhe und Ausrichtung seiner projizierten Laserebene der einer Arbeitsplatte in der Ecke eines Zimmers entspricht, so dass der Referenzpfad RP auf deren Kante zu liegen kommt und die Arbeitsplatte automatisch vermessen wird. Eine solche, insbesondere horizontale Aufstellung erlaubt beispielsweise die Vermessung von Flächen, wie in Fig.2 anhand der schematische Darstellung der in Fig.1 gezeigten Situation in Draufsicht verdeutlicht wird. Durch den Referenzstrahl RS, der in diesem Beispiel gleichzeitig den Messstrahl darstellt, wird der Raum in einem Winkelbereich von 360° in einer Ebene und damit zweidimensional abgetastet, wobei ein Rohr und die Arbeitsplatte in der Ecke erfasst und vermessen werden. Der Referenzpfad liegt damit in einer durch das um eine vertikale Achse erfolgte Rotieren des Referenzstrahls RS als optischer Messstrahl erzeugten Ebene, wobei das Rotieren beispielsweise mit einer definierten Winkelgeschwindigkeit von mindestens 4n rad/s erfolgt. Beim Bestimmen der Distanz zu den Punkten wird deren relative Lage im Referenzpfad bestimmt, wobei insbesondere der zugehörige Richtungswinkel $\alpha_i$ gegenüber einer geräteinternen oder externen Bezugsrichtung BR gemessen wird. Die Orientierung oder Nullrichtung kann dabei zu einem äusseren Koordinatensystem festgelegt sein. Für die Winkelbestimmung um die Drehachse können schnelle Winkelgeber mit Sekundengenauigkeit verwendet werden. Ist die Winkelgeschwindigkeit definiert und wird diese hinreichend konstant gehalten, so können die Winkel $\alpha_i$ auch anhand der zeitlichen Zuordnung bestimmt werden, so dass eine den Winkel direkt messende Komponente entfallen kann.

Aufgrund des aufgenommenen Oberflächenprofils können dann die Fläche des Raumes A1, die Querschnittsfläche A2 des Rohres sowie die Fläche A3 der Arbeitsplatte ermittelt werden. Die Konturen bzw. Umrandungen der zu vermessenden Objekte ergeben sich dann zu einem Teil aus den Messungen entlang des Referenzpfades sowie durch Berechnung oder Annahmen für den nicht abgetasteten oder nicht abtastbaren Bereich. In diesem Beispiel kann die Rückseite, d.h. die dem Gerät 1 abgewandten Seite, aus dem Verlauf der Wände des Zimmers links und rechts der Arbeitsplatte abgeschätzt werden. Alternativ oder ergänzend kann auch eine weitere Messung ober- oder unterhalb der Arbeitsplatte durchgeführt werden, so dass der dahinter befindliche Wandverlauf auch direkt abgetastet werden kann. Vorteilhaft ist es aber, wenn im Gerät 1 geometrische Grundformen als Mess- oder Berechnungsinformationen abgelegt sind, die entsprechend ausgewählt werden können. Zudem kann die Breite $B_{Tür}$ einer zum Raum führenden Tür automatisiert ermittelt werden.

Fig.3 erläutert ein bevorzugtes Entfernungsmessprinzip für ein erfindungsgemässes Verfahren anhand einer schematischen Darstellung einer typischen Signalfolge wie sie in einem elektronischen Distanzmesser auftritt. Dargestellt wird der Signalverlauf gegenüber der Zeitachse, wobei die Punkte Abtast- bzw. Samplingpunkte kennzeichnen. Der linke Puls stellt hierbei, wie bei Laufzeitmessern, einen Start- und der rechte Puls einen Stopimpuls dar. Die Laufzeit und damit die Distanz $D_i$ folgen beispielsweise aus dem zeitlichen Abstand der Scheitelpunkte der beiden Pulse, wobei die Pulse ähnlich wie bei Phasenmessern abgetastet werden. Ein entsprechendes Verfahren wird beispielsweise in der internationalen PCT-Anmeldung mit der Anmelde-Nr. PCT/EP2007/006226 in seinen Grundsätzen erläutert. Die Lösung basiert dabei auf der Kombination von zwei in der Entfernungsmessung übliche Grundprinzipien zur Signaldetektion. Das erste Grundprinzip basiert auf der Messsignaldetektion anhand der Schwellwertmethode und das zweite Grundprinzip auf der Signalabtastung mit nachgeschalteter Signalverarbeitung zur Identifikation und zeitlichen Lagebestimmung des Signals. Bei der Schwellwertmethode wird zwar meistens die Signaldetektion durch das Überschreiten der Signalamplitude über einen Schwellwert festgelegt, das distanzbestimmende Signalmerkmal aber kann ganz unterschiedlich sein. Einerseits kann die ansteigende Flanke des Empfangssignals den Zeittrigger auslösen, anderseits aber kann das Empfangssignal mittels eines elektronischen Filters in eine andere geeignete Form umgewandelt werden, um ein Triggermerkmal zu generieren, welches vorteilhafterweise unabhängig von der Impulsamplitude ist. Das entsprechende Triggersignal wird als Start- oder Stoppsignal einer Zeitmessschaltung zugeführt.

Beide Ansätze werden parallel zur Signaldetektion angewendet, das heisst, dass ein empfangener Puls bzw. eine Signalstruktur mit beiden Verfahren detektiert wird, was zumeist Gleichzeitigkeit oder zumindest zeitliche Überlappung der Verfahren impliziert. Kern des Prinzips ist eine verlustfreie Signalerfassung, wobei verlustfrei im Sinne der Erhaltung der Laufzeitinformation zu verstehen ist. Der Ansatz basiert dabei auf der Direktsignalabtastung des empfangenen Zeitsignals im GHz-Bereich. Das mittels eines breitbandigen, aber äusserst rauscharmen Transimpedanzempfängers vorverstärkten Empfangssignal wird mit einem schnellen AD-Wandler abgetastet und mit wenigstens 8 Bit quantisiert. Ein solcher Transimpedanzverstärker wird beispielsweise in der Europäischen Patentanmeldung mit der Anmelde-Nr. 07114572 beschrieben. Dieser AD-Wandler zeichnet sich aus durch eine niedrige INL (integral nonlinearity) und einem im Bereich der Messgenauigkeit vernachlässigbaren Aperturjitter, wobei man unter Aperturjitter die zeitliche Variation der abgetasteten Punkte bzw. Bereiche, d.h. also des Abstandes von Sample zu Sample versteht. Dieser AD-Wandler wird von einer hochstabilen Oszillatoreinheit getaktet. Dieser wird im wesentlichen durch die Track-and-Hold Einheit am Eingang des AD-Wandlers bestimmt, wobei typische Werte bei 1 bis 2 psec liegen.

Unter INL wird die über den Dynamikbereich von einer Geraden abweichenden Transferfunktion der im AD-Wandler implementierten Quantisierungseinheit verstanden. Ein idealer AD-Wandler konvertiert die Amplitude eines analogen Eingangssignals proportional in einen Digital-Code am Ausgang. Im Realfall kann aber die Abweichung gegen 0,3 LSB betragen, was zu störenden Signalverzerrungen führen kann. Dieser Aspekt ist besonders wichtig, um eine Messgenauigkeit bei grossen und kleinen Amplituden zu gewährleisten. Massnahmen zur Beseitigung dieser Einflüsse sind bekannt, beispielsweise haben einige AD-Wandler eine sogenannte Selbstkalibrierfunktion, welche von Zeit zu Zeit die INL messen und intern entsprechend reduzieren.

Im dargestellten Signalverlauf sind die Abtastpunkte äquidistant verteilt, wobei die Abstände mit einer Genauigkeit von weniger als 5 psec eingehalten werden. Die analoge Bandbreite des dem AD-Wandler vorgeschalteten analogen Empfängers bewegt sich im Bereich von 40 bis 400 MHz, wobei diese bewirkt, dass das am AD-Wandler anliegende Eingangssignal über mehrere Abtastintervalle geglättet wird. Wesentlich ist, dass der AD-Wandler einerseits das Signal-Rausch Verhältnis nicht verringert, anderseits aber die zu messende Signallaufzeit nicht verfälscht oder zeitlich verrauscht.

Der Stoppimpuls wird von der Sendeeinheit zum vermessenden Zielobjekt gelenkt und über eine Empfangsoptik auf einen Photodetektor geleitet. Das dadurch entstehende Zeitsignal enthält wenigstens einen Startimpuls und jedem optisch angestrahlten Target entsprechend einen Stoppimpuls.

Die Abtastfolge nach dem AD-Wandler wird einem FPGA (field programmable gate array) oder einem PLD (programmable logic device) zugeleitet und dort in Echtzeit verarbeitet. In einem ersten Schritt werden beispielsweise die Abtastwerte in einem digitalen Signalvektor zwischengespeichert. Die Länge eines solchen Daten-Records bestimmt die maximal zu vermessende Distanz. Werden beispielsweise 8192 Samples mit einer Tastrate von 1 GS/sec zwischengespeichert, so entspricht diese Record-Länge einer Zeitachse von 8192 nsec, was wiederum einer maximalen Distanz von 1229 m gleichkommt.

In einem zweiten Schritt folgt eine Signalanalyse, es wird die Zeitachse, beziehungsweise der digitale Signalvektor, nach einem Startpuls und allfälligen Stoppulsen abgesucht. Die Position der Pulse ist damit auf ein Abtastintervall genau bekannt. Die Differenz entspricht dabei einer ersten Grobschätzung der zu ermittelnden Distanz $D_i$.

Zur Verbesserung der Messgenauigkeit noch unter das Abtastintervall sind verschiedene hardware- und softwareseitige Verfahren bekannt. Beispielsweise ist mittels Schwerpunktauswertung der beiden Impulse Interpolation bis zu typischerweise einem Hundertstel des Zeitintervalls möglich. Weitere Methoden sind Digitale-FourierTransformation (DFT) mit Phasenauswertung oder Differenzierung mit Nulldurchgangsbestimmung. Vorzugsweise werden aber Auswertmethoden verwendet, die gegenüber Signalverzerrung und Sättigung robust sind, hier werden oft Ansätze aus der digitalen Filter- und Schätztheorie angewandt. Mit solchen Methoden sind 1 mm-Messgenauigkeiten erreichbar.

Die zur Realisierung dieses Messprinzips verwendete Schaltung wird in Fig.4 als schematisches Blockschaltbild dargestellt.

Am Beginn der Signalkette steht eine Strahlquelle 5, beispielsweise eine Laserdiode, mit entsprechender Ansteuerung LD, wobei ein erster Teil der Strahlung intern direkt zum Empfänger 6 und ein zweiter Teil der Strahlung extern auf das zu vermessende Zielobjekt geleitet werden. Die am Ziel reflektierte Strahlung wird anschliessend über eine Empfangsoptik ebenfalls zum Empfänger geführt. Die empfängerseitige Signalkette weist einen subnanosekundenschnellen Photodetektor als Empfänger 6, z.B. eine Avalanche-Photodiode, einen breitbandigen und rauscharmen Strom-zu-Spannungswandler TIA mit einer an den Laserpuls angepassten Grenzfrequenz, wie er beispielsweise in der Europäischen Patentanmeldung mit der Anmelde-Nr. 07114572 beschrieben ist, einen möglichst verzerrungs- und rauscharmen Spannungsverstärker LNA und wenigstens einen Hochgeschwindigkeits-AD-Wandler ADC.

Der breitbandige und rauscharme Strom-zu-Spannungswandler TIA kann beispielsweise als Transimpedanzverstärkerschaltung zum Umwandeln eines Eingangsstroms in eine Ausgangsspannung $U_{out}$ aus Verstärkerelement mit Signaleingang und Ausgang und einem T-förmigen Rückkopplungsnetzwerk aufgebaut sein. Mit optimal dimensionierten Rückkopplungsnetzwerken können lineare Verstärker mit Bandbreiten von über 500MHz und niedrigen Eingangsrauschströmen realisiert werden.

Das T-förmige Rückkopplungsnetzwerk weist dabei einen ersten, einen zweiten und einen dritten Zweig auf, die jeweils zu einer Seite hin mit einem Knotenpunkt K verbunden sind. Der erste Zweig, der andererseits mit dem Ausgang des Verstärkerelements verbunden ist, weist einen Rückkopplungswiderstand $R_1$ auf. Dieser Rückkopplungswiderstand $R_1$ bedingt ein Stromrauschen $I_{noise}$, das durch

$$I_{noise,R_1} = \sqrt{\frac{4kT}{R_1}}$$

gegeben ist, wobei T die absolute Temperatur und k die Boltzmann-Konstante darstellt.

Der durch den Rückkopplungswiderstand fliessende Strom $I_{R1}$ wird am Knotenpunkt K kapazitiv aufgeteilt, sodass nur ein Teil dieses Stroms - und somit auch nur ein Teil des Rauschstroms - zum Eingang des Verstärkerelements rückgeführt wird. Beispielsweise kann nun durch diese Stromteilung - betrachtet im Verhältnis zur Transimpedanz der Schaltung - eine rauschärmere Verstärkerschaltung realisiert werden.

Dazu weist der zweite Zweig des T-förmigen Rückkopplungsnetzwerkes mindestens eine kapazitive Komponente $C_2$ und der dritte Zweig, der zum Signaleingang des Verstärkerelements führt, mindestens eine kapazitive Komponente $C_3$ auf.

Die Signalleitungen zwischen den Komponenten der Empfängerschaltung werden vorzugsweise differentiell geführt. Die empfängerseitige Signalkette kann auch in mehrere Pfade mit unterschiedlicher Verstärkung aufgeteilt werden. Jeder dieser Pfade wird dann einem entsprechenden AD-Wandler zugeführt. Standard-AD-Wandler haben typischerweise 2 oder auch mehr Eingangskanäle. Dadurch kann die Empfangsignaldynamik erweitert werden.

Die digitalen Signalfolgen werden in wenigstens einen FPGA oder einem PLD (programming logic device) zur Signalaufbereitung und Verarbeitung weiter geleitet. Die Ressourcen heutiger FPGA genügen, um die Distanzauswertung zwischen Start- und Stopp-Pulsen im Echtzeitbetrieb mit einer Rate bis 1 MPts/sec auszuwerten und auf einer Hochgeschwindigkeits-Schnittstelle auszugeben. Schnelle FPGA's gestatten zudem eine zur Distanzauswertung synchrone Berechnung und Ausgabe der Signalstärke, insbesondere diejenige des Stoppimpulses. Durch Parallelisierung der Berechnungsprozesse kann auch auf energiesparende PLDs zurückgegriffen werden. Für das Ablegen der Daten ist eine Speichereinheit MEM vorgesehen.

Im Fall von schwachen Empfangsignalen kann situativ vom Einzelschussmodus auf Akkumulationsmodus umgestellt werden. In diesem Betriebsmodus summiert der FPGA die den Messsequenzen zugehörigen digitalen Signalvektoren synchron im Takt der Laserschussrate und legt die Daten in einem entsprechend langen Speicher ab. Zeitverzögert, aber fortlaufend wird die Distanz berechnet und ausgegeben. Dieses Verfahren hat den Vorteil, dass auch sehr schwache Empfangspulse gemessen werden können und die Messgeschwindigkeit unverändert hoch bleibt.

Werden Objekte, wie beispielsweise Innenräume, repetitiv abgetastet, also Profile aufgenommen, so kann aufgrund der Mehrfachmessung desselben Profils auch eine andere Methode zur Steigerung der Messempfindlichkeit angewendet werden. In diesem Fall werden zwar Distanzmessungen nach dem Einzelschussverfahren bestimmt, aber gleichzeitig wird ein Akkumulationsmodus aktiviert, welcher die dem abgescannten Profil entsprechenden und gemessenen Distanzen in einem zusätzlichen Speicher ablegt. Die Speicherlänge entspricht dabei genau der Anzahl Punkte auf einer Profilspur und hängt unter anderem von der Repetitions- oder Rotationsfrequenz ab. In diesem Betriebsmodus summiert der FPGA Distanzen, die jeweils genau einem zugehörigen Punkt auf dem Objektprofil entsprechen. Hier entspricht die Länge dieses Profilspeichers einer Spur quer über das zu vermessende Objekt. Auch hier kann die sich laufend verbessernde Distanz zusammen mit dem Winkelmesswert kontinuierlich aktualisiert und ausgegeben werden. Wobei dieses Verfahren ebenfalls den Vorteil hat, dass schwach reflektierende Räume und Objekte genau vermessen oder abgescannt werden können.

Die Basis für die genaue Laufzeitmessung wird von einem Temperatur-korrigierten Quarz MC abgeleitet. Diese sind handelsüblich und haben eine typische Ganggenauigkeit von 0,2 ppm. Das Zeit- oder Clocksignal des Quarz wird mittels eines PLL-Oszillators VCO beispielsweise auf 1 GHz rauscharm hochmultipliziert. Das Ausgangssignal des Oszillators VCO bildet das pikosekundengenaue Zeitsignal des AD-Wandlers. Letzterer leitet das Zeitsignal oder Clock auf einem speziell dafür vorgesehenen PIN an einen Digital Clock Manager weiter, diese Einheit kann als State-Machine im FPGA ausgebildet sein. Dieser Digital Clock Manager hat unter anderem die Funktion, auf der Lasertrigger-Leitung die konfigurierte Laserschussfrequenz synchron zum AD-Wandler mit Pikosekunden-Genauigkeit zu erzeugen.

Die Entfernungsmessschaltung zusammen mit Detektor-Ansteuerung, Temperatursensoren und allfälligen einstellbaren optischen Abschwächern wird von einer zentralen Steuereinheit CU gesteuert.

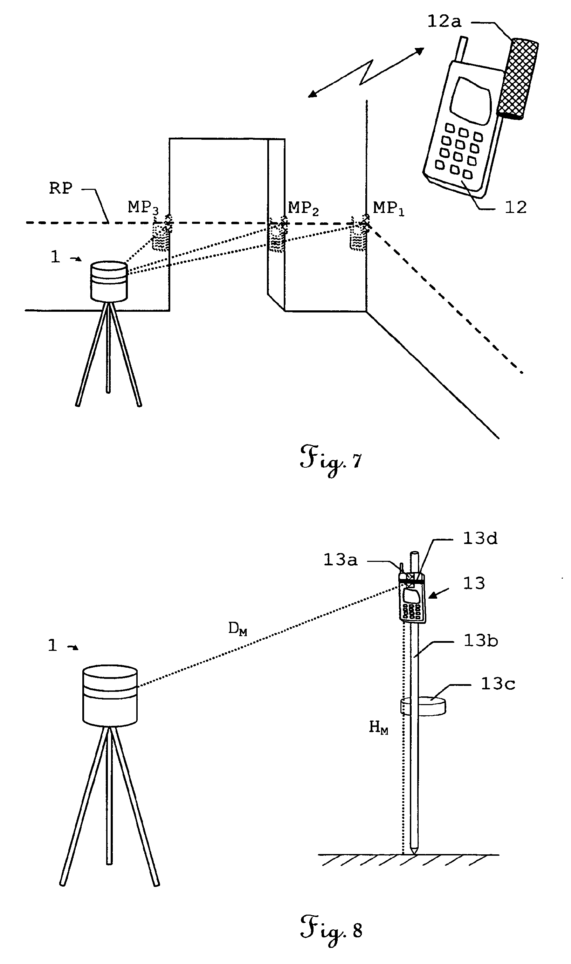

Erfolgt eine Markierung von Zielpunkten durch kooperative Zielobjekte, wie z.B. Reflektoren, so kann aus dem Signalverlauf auch eine Abtastsequenz initiiert werden, was in Fig.5 als ein Anwendungsbeispiel des Entfernungsmessprinzips dargestellt wird. Wie in Fig.7 dargestellt, können durch Reflektoren Messpunkte erkennbar gestaltet werden, da durch das erhöhte Reflektionsvermögen gegenüber dem nicht-kooperativen Hintergrund ein entsprechender Anstieg der Signalstärke in Abhängigkeit der Messpunktnummer oder des Winkels im Profil auftritt. Die Markierung von Messpunkten erlaubt somit das Auslösen eines automatisierten Messprozesses, was in Fig.5 für das Beispiel der Aufnahme eines Oberflächenprofils zwischen zwei Reflektoren verdeutlicht wird. Während der räumlichen Abtastbewegung wird durch den Empfänger ein Anstieg der Signalintensität detektiert, der nach Überschreiten eines Schwellwertes SW zur Auslösung eines fortlaufenden Entfernungsmessvorgangs mit Aufzeichnung der entsprechenden Daten führt, d.h. von Messpunkten $P_i$ und zugeordneten Winkeln $\alpha_i$ sowie insbesondere zugeordneten Intensitäten als Punktattribute. Der erste Intensitätsanstieg definiert somit durch den ersten Abtastwert, der über dem Schwellwert SW liegt, einen Startpunkt SP, welcher in gleicher Weise durch den ersten schwellwertüberschreitenden Abtastwert des zweiten Intensitätsanstieg als Endpunkt EP wieder beendet wird. Durch Start- und Endpunkt SP, EP wird somit ein Profilfenster der Aufzeichnungslänge $A_M$ gesetzt. Neben einer solchen Auslösung einer Mess- oder Registriersequenz kann diese auch manuell, winkelgesteuert, d.h. mit einem Startwinkel $\alpha_S$ und einem Endwinkel $\alpha_E$, durch Vorgabe eines gespeicherten Messablaufs oder auf andere Weise ausgelöst werden.

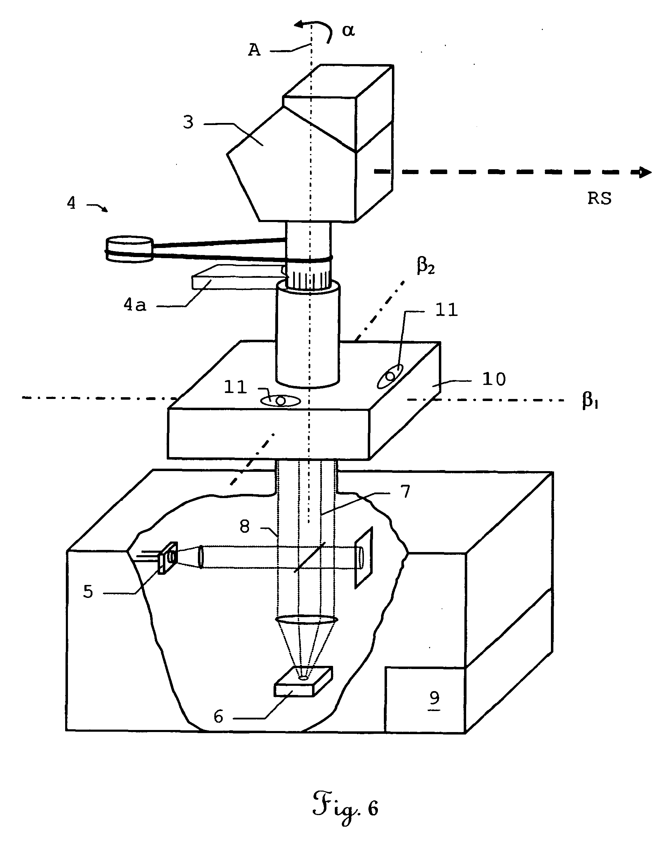

Ein erstes Ausführungsbeispiels des erfindungsgemässen referenzlinienprojizierenden Gerätes wird in Fig.6 schematisch dargestellt. Das Gerät weist eine Strahlquelle 5, beispielsweise ein Laserdiode, zur Erzeugung eines Referenzstrahls RS auf, der gleichzeitig als Messstrahlung 7 dient und über das von einem Antrieb 4 um eine Achse A bewegten Strahlumlenkmittel 3 als Mittel zum Lenken des Referenzstrahls RS ausgesandt werden. In dieser Ausführungsform, die rein beispielhaft mit einem Pentaprisma als Strahlumlenkmittel 3 realisiert ist, ist der Umlenkwinkel 90 Grad, sodass der Referenzstrahl eine Ebene erzeugt. Der Antrieb 4 ist hier lediglich beispielhaft über einen Riemen dargestellt. Erfindungsgemäss können verschiedenste, dem Fachmann bekannte Antriebskomponenten, z.B. mittels Getrieben oder direkt antreibenden Hohlachsenmotoren, verwendet werden. In diesem Ausführungsbeispiel wird ein Spiegel als fix zur Achse A montiertes Strahlumlenkmittel 3 verwendet, wobei dessen Achse A der Rotation über einen Kipptisch 10 vertikal ausrichtbar ist, insbesondere anhand von Neigungssensoren 11. Alternativ kann jedoch auch eine bewegbare oder rotierbare Strahlquelle verwendet werden, so dass ein Strahlumlenkmittel 3 entfallen kann. In dieser speziellen Ausführungsform weisen die Mittel zum Lenken des Referenzstrahls RS jedoch das bewegbare Strahlumlenkmittel 3 auf, das eine horizontierbare Ebene erzeugt, wobei diese jedoch auch um zwei Neigungswinkel $\beta_1$ und $\beta_2$ gekippt werden kann, so dass die Achse A in einer definierten Richtung um einen definierten Winkel $\beta_N$ geneigt relativ zur vertikalen Lotrichtung ausrichtbar ist.

Mit dem Pentaprisma als Strahlumlenkmittel 3 wird bewirkt, dass der Referenzpfad RP in einer Ebene senkrecht zur Achse A liegt und der Messstrahl um die Achse A rotiert, insbesondere mit einer definierten Winkelgeschwindigkeit von mindestens 4n rad/s. Die jeweiligen Stellungen des Strahlumlenkmittels 3, d.h. der Emissionswinkel des Messstrahls, ist durch Mittel zum Bestimmen der Winkel $\alpha_i$ ableitbar. Beispielsweise kann die Stellung direkt durch zusätzliche oder zum Antrieb 4 gehörige Winkelsensoren 4a gemessen oder aber bei konstanter Rotationsgeschwindigkeit durch Zuordnung zum Emissionszeitpunkt ermittelt werden. Grundsätzlich kann die Messstrahlung als zum Referenzstrahl parallele oder koaxiale Emission erfolgen oder aber der Referenzstrahl RS selbst als Messstrahl verwendet werden, wobei dieser durch eine elektronischen Entfernungsmesseinheit entsprechend gesteuert wird.

Die Charakteristik der zu emittierenden Strahlung wird so gewählt, dass wenigstens ein Teil des Referenzpfades RA bei dessen Durchlaufen durch das menschliche Auge und/oder Detektoren als Referenzlinie erfassbar ist.

Die von einer Oberfläche zurückgeworfenen Anteile 8 des Mess- bzw. Referenzstrahls RS werden wiederum über die Strahlumlenkmittel auf einen Empfänger 6 als photosensitive Empfangskomponente geführt, der Teil der elektronischen Entfernungsmesseinheit ist. Die Bestimmung von Distanzen $D_i$ zu Punkten $P_i$ im Referenzpfad erfolgt in einer Auswerteeinheit 9, wobei diese so ausgelegt ist, dass bei einer entsprechender Auswahl eines Modus der Referenzpfad wenigstens einen Punkt enthält, der beim Durchlaufen des Referenzpfades zur Bestimmung seiner Distanz $D_i$ vermessen wird. Das Gerät kann so eingestellt werden, dass die Mittel zum Lenken des Referenzstrahls RS so angesteuert werden, dass automatisch ein wiederholtes, insbesondere vielfach wiederholtes, Durchlaufen des Referenzpfades erfolgt, wodurch eine kontinuierliche Datenaufnahme zur Distanzbestimmung erfolgt. Hierfür kann die Auswerteeinheit 9 oder ein Programm aufweisen, wodurch das beim wiederholten Durchlaufen des Referenzpfades für den mindestens einen Punkt $P_i$ gemessene Signal 8 des Messstrahls akkumuliert und/oder zugeordnete Signale aggregiert werden. Vorzugsweise werden digitalisierte Signalwerte Filterbanken zugeführt, welche die Messwerte laufend mitteln und so zu verbesserten Koordinaten führen. Für rasche Messpunktfolgen sind besonders IIR-Filter geeignet, mit welchen Rauschunterdrückung durch Frequenzfilterung on-line realisiert werden können.

Um Abtastungen zu gewährleisten, die eine sichtbare Projektion der Referenzlinie bewirken, ist es vorteilhaft, wenn der Referenzstrahl mit ca. 2 bis 10Hz rotiert, die Entfernungsmesseinheit sollte dabei eine Messrate von mindestens 1kHz haben, damit auf dem Referenzpfad die Profilpunkte genügend dicht liegen

In dieser Ausführungsform weist das Gerät somit einen Sendestrahlgang 7 zwischen der Laserquelle und den Mitteln zum Lenken des Referenzstrahls RS sowie einen Empfangsstrahlgang 8 zwischen den Mitteln zum Lenken des Referenzstrahls RS und dem Empfänger 6 auf, wobei der Sendestrahlgang 7 und der Empfangsstrahlgang 8 koaxial oder parallel zur Achse A angeordnet sind. Zusätzlich kann ein Teil von durch die Strahlquelle 5 ausgesendeten Messstrahlen geräteintern auf den Empfänger 6 gelenkt werden.

Fig.7 erläutert ein erstes Anwendungsbeispiel des erfindungsgemässen Verfahrens mit einem kooperativen Ziel schematisch. Hier wird ein referenzlinienprojizierendes Gerät 1 in einem Raum positioniert, wodurch mittels Referenzpfad RP eine als Höhenreferenz dienende Ebene auf die Wände projiziert wird. Entlang dieser Höhenlinie können durch Positionieren einer Markiereinheit 12 mehrere Messpunkte $MP_1$-$MP_3$ ausgezeichnet werden. Das Gerät 1 erkennt hierbei ein an der Markiereinheit 12 angebrachtes reflektierendes Element 12a, das zum Kennzeichnen eines Punkts $P_i$ des Referenzpfades RP dient. Das Gerät 1 verknüpft nun mit den Reflexionen der reflektierenden Elemente 12a verbundenen Positionen mit den Messpunkten $MP_1$-$MP_3$, was beispielsweise die Festlegung von Strukturmerkmalen im Raum oder das Auslösen von Vorgängen, z.B. einer Abtastung oder der Messung einer lateralen Distanz, erlaubt. Mit einem solchen Vermessungssystem aus referenzlinienprojizierendem Gerät 1 und Markiereinheit 12 können somit auch Distanzen auf Oberflächen definiert und vermessen werden. Allgemein können durch Markiereinheiten definiert Teilprofile zwischen Messpunkten $MP_k$ aufgenommen werden. Vorteilhafterweise weist das referenzlinienprojizierende Gerät 1 und die Markiereinheit 12 Kommunikationsmittel zur Herstellung einer mindestens einseitigen, insbesondere gegenseitigen Kommunikationsverbindung auf, so dass Daten übertragen oder auch das Gerät 1 über die Markiereinheit 12 ferngesteuert werden können.

Bei der in Fig.7 dargestellten horizontalen Aufstellung des Geräts 1 werden lediglich die Koordinaten von Punkten in einer entsprechenden horizontal ausgerichteten Ebene vermessen. Ist das Gerät als Grade-Laser, d.h. mit neigbarer Rotationsebene, ausgebildet, so kann jeder Punkt im Raum angemessen und dessen Koordinaten (x,y,z) bestimmt werden.

Fig.8 zeigt die schematische Darstellung eines zweiten Anwendungsbeispiels des erfindungsgemässen Verfahrens mit einem kooperativen Ziel. In diesem Beispiel wird eine Markiereinheit 13 verwendet, welche in der Lage ist, die eigene Höhe $H_M$ zu bestimmen, was entweder durch eine eigene Distanzmessfunktionalität zum Boden oder aber eine mechanische Distanzbestimmung erfolgen kann. Beispielsweise kann die Markiereinheit 13 neben einem reflektierenden Element 13a, welches auch eine Nullhöhenmarkierung 13d tragen kann, auch einen Lotstock 13b und eine Libelle als Neigungsmesser 13c aufweisen. Die Markiereinheit 13 kann dann mit der Spitze des Lotstocks 13b auf dem Boden positioniert und vermittels des Neigungsmessers 13c in eine vertikale Stellung gebracht werden, so dass die Höhe durch die Position des reflektierenden Elementes 13a, zusammen mit der Nullhöhenmarkierung 13d auf dem Lotstock 13b definiert ist. Vorzugsweise kann das reflektierende Element 13a hierbei auch gegenüber dem Lotstock 13b verschiebbar angeordnet sein, wobei anhand einer Teilung die genaue Höhe ablesbar ist.

In einem Anwendungsbeispiel kann mit einem solchen Vermessungssystem die Vermessung von Senken in Flachdächern durchgeführt werden. Hierzu wird das beispielsweise als Rotationslaser ausgebildete Gerät 1 auf dem Dach plaziert, wobei die Ebene der Referenzstrahlen in diesem Fall horizontiert wird. Mit der Markiereinheit 13 wird nun das Flachdach an verschiedenen Stellen, insbesondere im Bereich von Vertiefungen bzw. Wasseransammlungen mit dem unteren Ende des Lotstocks 13b kontaktiert. Daraufhin wird der Lotstock 13b vertikal ausgerichtet und das reflektierende Element 13a mit der Nullhöhenmarkierung 13d so lange verschoben, bis dieses durch die Messstrahlung des Gerätes 1 erfasst wird. Dieses erkennt mittels der Signalstärke und des zugeordneten Abtastprofils das reflektierende Element 13a, vermisst die entsprechende Distanz $D_M$ und Richtung zu demselben und übermittelt diese erfolgte Messung an die Markiereinheit 13. Somit sind nun die vollständigen Koordinaten des Punktes am unteren Ende des Lotstocks bekannt. Alternativ zur Nullhöhenmarkierung 13d kann das reflektierende Element 13a auch mit einer Detektorfunktionalität für den Mess- oder Referenzstrahl ausgebildet sein, so dass die Markiereinheit 13 selbsttätig erkennt, wenn das reflektierende Element 13a in die Ebene des Referenzstrahls RS gelangt, was bedeutet, das eine entsprechende Höhe $H_M$ abgelesen werden kann.

In diese Gruppe von Anwendungsbeispielen gehört auch die Vermessung von Plätzen oder Geländeböschungen mit gleichmässigem Gefälle. Bei diesen Aufgaben erzeugt das Gerät 1 eine Referenzstrahlenschar, welche eine entsprechend geneigte Ebene definiert.

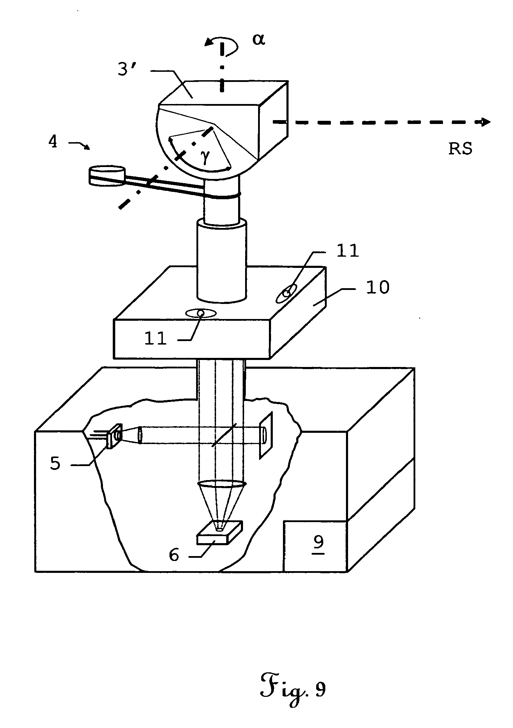

Ein zweites Ausführungsbeispiel des erfindungsgemässen Gerätes wird in Fig.9 schematisch dargestellt. Der Aufbau ähnelt hierbei dem in Fig.6 dargestellten Gerät. Allerdings sind die als Spiegeloberfläche ausgebildeten Strahlumlenkmittel 3' nun um eine horizontale Achse kippbar ausgebildet, so dass eine rasche Verstellung der Emissionsrichtung in zwei Winkel $\alpha$ und $\gamma$ erfolgen kann. Als schnell schwenkbare Umlenkmittel können hierbei beispielsweise Galvano-Spiegel verwendet werden. Vorzugsweise stehen die beiden Rotationsachsen senkrecht zueinander. Durch eine solche Ausbildung des referenzlinienprojizierenden Gerätes ist die Projektion von Referenzlinien mit prinzipiell beliebigem Verlauf realisierbar. Insbesondere können nun auch Markierungen oder ähnliche Informationen auf Oberflächen projiziert werden, auch mit zeitweiligem Ausschalten oder Unterbrechen der Emission. Neben der in Fig. 6 und Fig.9 dargestellten Ausführungsbeispiele mit starren, aber in einer oder zwei Achsen schwenkbaren Spiegeloberflächen können als Strahlumlenkmittel auch weitere dem Fachmann bekannte optische Komponenten als Mittel zum Führen des Referenzstrahls Verwendung finden. Beispielsweise erlauben deformierbare Spiegeloberflächen, z.B. als mikromechanisch verstellbare Komponente, ebenfalls eine Strahlführung in zwei Achsen.

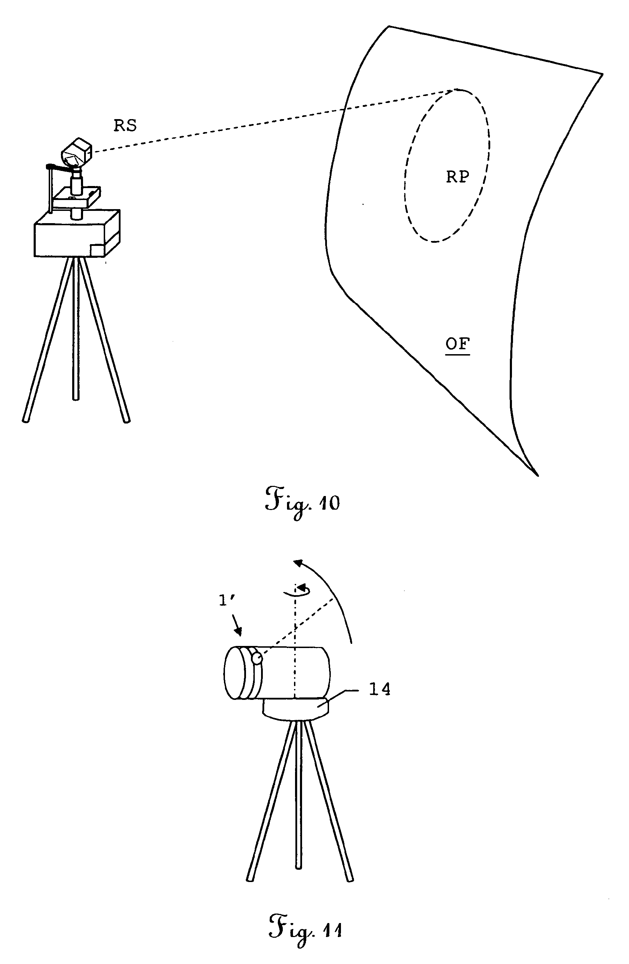

Fig.10 veranschaulicht ein Anwendungsbeispiel für das zweite Ausführungsbeispiel des erfindungsgemässen Gerätes. Dieses Gerät ist nun in der Lage, aufgrund der Oberflächenabtastung und Vermessung zu Punkten im Referenzpfad eine Oberflächen- oder zumindest Referenzpfadtopographie zu erstellen. Dies erlaubt eine Projektion der Referenzstrahlung RS in einer Weise, welche Projektionsverzerrung durch die Form der Oberfläche OF kompensiert, d.h. die Projektion des Referenzpfades erfolgt in einer Weise verzerrt, die auf der gekrümmten Oberfläche wiederum das beabsichtige unverzerrte Bild ergibt. In Fig.10 ist dies für das Beispiel eines kreisförmigen Ausschnittes gezeigt, der in eine geneigte oder zusätzlich noch gekrümmte Oberfläche eingebracht werden soll. Durch die Neigung und Krümmung würde eine auf einer ebenen und senkrechten Wand kreisförmig erscheinende Referenzlinien zu einer Ellipse verzerrt. Aufgrund der Richtungs- und Entfernungsmessfunktionalität kann die Topographie und Orientierung der Oberfläche OF erfasst und beim Führen des Referenzstrahls RS berücksichtigt werden, so dass dieser in einer entsprechend angepassten Ellipse emittiert wird, die nach Auftreffen auf die geneigte und gekrümmte Oberfläche OF wieder als der gewünschte kreisförmige Referenzlinie wahrnehmbar ist. Mit einem solchen Vermessungssystem können beispielsweise die Konturen von Bohrlöchern oder Ausbrüchen für Kanaldurchführungen abgesteckt werden.

Fig.11 veranschaulicht ein drittes Ausführungsbeispiel des erfindungsgemässen Geräts 1'. Der Aufbau ähnelt wiederum dem in Fig.6 dargestellten Gerät. In diesem Fall ist das mit Rotationslaser ausgerüstete Gerät seitlich auf einem Drehtisch 14 montiert. Vorzugsweise stehen Drehtischachse und Rotationsachse A senkrecht zueinander. Die Ebene der Referenzstrahlen steht dadurch parallel zur Drehtischachse. In dieser lay-down Lage mit Rotation des Geräts 1' um die Drehtischachse, zusammen mit Winkel und Distanzmessung können die 3D-Koordinaten des ganzen Raumes vermessen werden. Die Ausführungsform weist damit eine einem Scanner vergleichbare Funktionalität auf.

Es versteht sich, dass diese dargestellten Figuren nur Beispiele möglicher Ausführungsformen darstellen. Insbesondere kann der innere Aufbau des referenzlinienprojizierenden Gerätes auch anders oder mit anderen Komponenten realisiert werden.

**Patentansprüche**

1. Distanzmessendes Verfahren für ein referenzlinienprojizierendes Gerät (1) mit einem elektro-optischen Distanzmesser und den Schritten

   • Aussenden und Führen eines optischen Referenzstrahls (RS) entlang eines definierten Referenzpfades (RP), insbesondere eines definiert und variierbar vorgebbaren Referenzpfads (RP), wobei wenigstens ein Teil des Referenzpfades (RP) bei dessen Durchlaufen durch das menschliche Auge und/oder Detektoren als Referenzlinie erfassbar ist,

   • Entfernungsmessung zu mindestens einem Punkt ($P_i$) des Referenzpfades (RP), insbesondere zu vielen Punkten ($P_i$), durch
   • Aussenden eines zum Referenzstrahl (RS) parallelen oder koaxialen Messstrahls und Führen des Messstrahls entlang des Referenzpfades (RP) oder Verwenden des Referenzstrahls (RS) als Messstrahl, Empfangen von Anteilen des von dem mindestens einen Punkt ($P_i$) zurückgeworfenen Messstrahls und Ableiten wenigstens eines Signals aus diesen Anteilen und
   • Bestimmen der Distanz ($D_i$) zu dem mindestens einen Punkt ($P_i$) aus dem wenigstens einen Signal, insbesondere wobei die Signale mit einer Messrate von mindestens 1kHz aufgenommen werden,

   **dadurch gekennzeichnet, dass**
   das Führen des Mess- und Referenzstrahls (RS) bzw. des als Messstrahl verwendeten Referenzstrahls (RS) entlang des Referenzpfades (RP) mindestens einmal automatisch wiederholt wird, insbesondere vielfach wiederholt wird, und
   bei jedem Durchlaufen des Referenzpfades (RP) für den mindestens einen Punkt ($P_i$) jeweils eine distanzbezogene Grösse ($D_{ij}$) in Form einer Laufzeit oder einer Phase des Messstrahls ermittelt wird.

2. Distanzmessendes Verfahren nach Anspruch 1,
   **dadurch gekennzeichnet, dass**
   durch das wiederholte Durchlaufen des Referenzpfades (RP) die für den mindestens einen Punkt ($P_i$) empfangenen Anteile des Messstrahls akkumuliert und/oder deren zugeordnete Signale aggregiert werden.

3. Distanzmessendes Verfahren nach einem der Ansprüche 1 oder 2,
   **dadurch gekennzeichnet, dass**
   das Führen entlang des Referenzpfades (RP) mit einer derartigen Geschwindigkeit erfolgt, dass während des Durchlaufens der Referenzpfad (RP) für das menschliche Auge in seiner Gesamtheit gleichzeitig wahrnehmbar ist.

4. Distanzmessendes Verfahren nach einem der vorangehenden Ansprüche,
   **dadurch gekennzeichnet, dass**
   wenigstens ein Neigungswinkel ($\beta_1, \beta_2$) zur Lotrichtung erfasst wird.

5. Distanzmessendes Verfahren nach einem der vorangehenden Ansprüche,
   **dadurch gekennzeichnet, dass**
   der optische Messstrahl um eine zum Lot ausrichtbare Achse (A) rotiert und eine, insbesondere als Höhenreferenz verwendete, Ebene definiert, insbesondere mit einer definierten Winkelgeschwindigkeit von mindestens 4n rad/s,
im Speziellen wobei der zur Achse (A) gehörige Winkel ($\alpha_i$) zu dem mindestens einen Punkt ($P_i$) bestimmt wird.

6. Distanzmessendes Verfahren nach einem der vorangehenden Ansprüche,
**dadurch gekennzeichnet, dass**
beim Bestimmen der Distanz ($D_i$) zu dem mindestens einen Punkt ($P_i$) dessen relative Lage im Referenzpfad (RP) bestimmt wird.

7. Distanzmessendes Verfahren nach Anspruch 6,
**dadurch gekennzeichnet, dass**
die Koordinaten der Punkte ($P_i$) auf dem Referenzpfad (RP) mit Hilfe des zur Drehachse (A) gehörigen Winkels ($\alpha_i$) und der Neigungswinkel ($\beta_1, \beta_2$) zur Lotrichtung bestimmt werden, insbesondere in einem äusseren Referenzkoordinatensystem.

8. Referenzlinienprojizierendes Gerät (1) mit

• einer Strahlquelle (5) zur Erzeugung eines Referenzstrahls (RS), insbesondere einer Laserquelle,
• Mitteln zum Lenken des Referenzstrahls (RS) entlang eines definierten Referenzpfades (RP), wobei wenigstens ein Teil des Referenzpfades (PA) bei dessen Durchlaufen durch das menschliche Auge und/oder Detektoren als Referenzlinie erfassbar ist,
• einer elektronischen Entfernungsmesseinheit

- zur Emission eines zum Referenzstrahl (RS) parallelen oder koaxialen Messstrahls derart, dass der Messstrahl und der Referenzstrahl (RS) entlang des Referenzpfades (RP) anhand der Mittel zum Lenken lenkbar sind, oder zum Steuern des Referenzstrahls (RS) als Messstrahl und
- mit einem Empfänger (6) zum Empfang von Anteilen des Messstrahls, die von einer Oberfläche (OF) zurückgeworfen werden, und
- mit einer Auswerteeinheit (9) zur Bestimmung von Distanzen ($D_i$) zu Punkten ($P_i$) im Referenzpfad (RP), an welchen der Messstrahl von der Oberfläche (OF) zurückgeworfen wird, wobei der Referenzpfad (RP) wenigstens einen Punkt ($P_i$) enthält, der beim Durchlaufen des Referenzpfades (RP) zur Bestimmung seiner Distanz ($D_i$) anhand einer distanzbezogenen Grösse ($D_{ij}$) vermessbar ist,

**dadurch gekennzeichnet, dass**
die Mittel zum Lenken so ansteuerbar sind, dass automatisch ein wiederholtes, insbesondere vielfach wiederholtes, Durchlaufen des Referenzpfades (RP) mit dem Referenzstrahl (RS) und dem Messstrahl bzw. dem als Messstrahl gesteuerten Referenzstrahl (RS) erfolgt, und die Entfernungsmesseinheit ausgebildet ist zur Erfassung einer distanzbezogene Grösse ($D_{ij}$) in Form einer Laufzeit oder einer Phase des Messstrahls für den mindestens einen Punkt ($P_i$) bei jedem Durchlaufen des Referenzpfades (RP).

9. Referenzlinienprojizierendes Gerät (1) nach Anspruch 8,
**dadurch gekennzeichnet, dass**
die Auswerteeinheit (9) eine Schaltung aufweist, die beim wiederholten Durchlaufen des Referenzpfades (RP) für den mindestens einen Punkt ($P_i$) empfangenen Anteile des Messstrahls akkumuliert und/oder zugeordnete Signale aggregiert.

10. Referenzlinienprojizierendes Gerät (1) nach einem der Ansprüche 8 oder 9,
**dadurch gekennzeichnet, dass**
die Entfernungsmesseinheit eine Messrate von mindestens 1kHz aufweist.

11. Referenzlinienprojizierendes Gerät (1) nach einem der Ansprüche 8 bis 10,
**gekennzeichnet durch**
Mittel (4a) zum Bestimmen von Emissionswinkeln ($\alpha, \alpha_1, \gamma$) des Messstrahls (MS).

12. Referenzlinienprojizierendes Gerät (1) nach einem der Ansprüche 8 bis 11,
**dadurch gekennzeichnet, dass**
die Mittel zum Lenken ein um einen Winkel ($\gamma$) bewegbares Strahlumlenkmittel (3,3') aufweisen, insbesondere wobei - für den Fall, dass Mittel (4a) zum Bestimmen der Emissionswinkel ($\alpha, \alpha_1, \gamma$) gemäss Anspruch 11 vorgesehen sind - durch diese Mittel (4a) Stellungen des Strahlumlenkmittels (3,3') bestimmbar, insbesondere messbar, sind.

13. Referenzlinienprojizierendes Gerät(1) nach einem der Ansprüche 8 bis 12,
**dadurch gekennzeichnet, dass**
der Referenzpfad (RP) in einer Ebene liegt und die Mittel zum Lenken bewirken, dass der Messstrahl um eine, insbesondere anhand von Neigungssensoren (11) ausrichtbare, Achse (A) rotierbar ist, insbesondere mit einer definierten Winkelgeschwindigkeit von mindestens $4\pi$ rad/s.

14. Referenzlinienprojizierendes Gerät(1) nach einem der Ansprüche 8 bis 13,
**dadurch gekennzeichnet, dass**
die Entfernungsmesseinheit einen Sendestrahlgang (7) zwischen der Strahlquelle (5) und den Mitteln zum Lenken sowie einen Empfangsstrahlgang zwischen den Mitteln zum Lenken und dem Empfänger (6) aufweist, wobei der Sendestrahlgang (7) und der Empfangsstrahlgang (8) teilweise koaxial oder parallel zur Achse (A) angeordnet sind, insbesondere wobei ein Teil des durch die Strahlquelle (5) ausgesendeten Messstrahls ohne das Gerät (1) zu verlassen geräteintern auf den Empfänger (6) gelenkt wird.

15. Vermessungssystem mit einem referenzlinienprojizierenden Gerät (1) nach einem der Ansprüche 8 bis 14 und einer unabhängig positionierbaren Markiereinheit (12,13), insbesondere mit Mitteln zur Distanzmessung, zum Kennzeichnen eines Punkts ($P_i$) des Referenzpfades (RP), wobei die Markiereinheit (12,13) ein reflektierendes Element (12a,13a) aufweist, insbesondere wobei das referenzlinienprojizierende Gerät (1) und die Markiereinheit (12,13) Kommunikationsmittel zur Herstellung einer mindestens einseitigen, insbesondere gegenseitigen Kommunikationsverbindung aufweisen.

## Claims

1. Distance-measuring method for a device (1) projecting a reference line, having an electro-optical distance meter and the steps of

   • emitting and guiding an optical reference beam (RS) along a defined reference path (RP), in particular a reference path (RP) which can be prescribed in a defined and variable manner, it being possible to detect as reference line at least a part of the reference path (RP) upon traversal of said part through the human eye and/or detectors,
   • measuring distance in relation to at least one point ($P_i$) of the reference path (RP), in particular in relation to many points ($P_i$), by

      • emitting a measuring beam that is parallel to or coaxial with the reference beam (RS), and guiding the measuring beam along the reference path (RP), or using the reference beam (RS) as measuring beam,
      • receiving components of the measuring beam retroreflected by the at least one point ($P_i$), and deriving at least one signal from these components, and

   • determining the distance ($D_i$) from the at least one point ($P_i$) from the at least one signal, the signals in particular being recorded at a measuring rate of at least 1 kHz,

   **characterized in that**
   the guidance of the measuring and reference beam (RS) or of the reference beam (RS) used as measuring beam along the reference path (RP) is repeated automatically at least once, in particular many times, and
with each traversal of the reference path (RP) a distance-related variable ($D_{ij}$) is respectively determined for the at least one point ($P_i$) in the form of a transit time or a phase of the measuring beam.

2. Distance-measuring method according to Claim 1, **characterized in that** the components of the measuring beam that are received for the at least one point ($P_i$) are accumulated, and/or their assigned signals are aggregated by the repeated traversal of the reference path (RP).

3. Distance-measuring method according to either of Claims 1 and 2, **characterized in that** guidance along the reference path (RP) is performed at such a speed that during the traversal the reference path (RP) can simultaneously be perceived in its entirety by the human eye.

4. Distance-measuring method according to one of the preceding claims, **characterized in that** at least one inclination angle ($\beta_1$, $\beta_2$) is detected in relation to the vertical direction.

5. Distance-measuring method according to one of the preceding claims, **characterized in that** the optical measuring beam is rotated about an axis (A) which can be aligned relative to the vertical and defines a plane used, in particular, as a height reference, particularly at a defined angular velocity of at least $4\pi$ rad/s, the angle ($\alpha_i$) relevant to the axis (A) specifically being determined in relation to the at least one point ($P_i$).

6. Distance-measuring method according to one of the preceding claims, **characterized in that** during determination of the distance ($D_i$) from the at least one point ($P_i$) the relative position of the latter in the reference path (RP) is determined.

7. Distance-measuring method according to Claim 6, **characterized in that** are determined the coordinates of the points ($P_i$) on the reference path (RP) with the aid of the angle ($\alpha_i$) relevant to the rotary axis (A), and of the inclination angles ($\beta_1$, $\beta_2$) in relation to the vertical direction, in particular in an external reference coordinate system.

8. Reference line projecting device (1) having

   • a beam source (5) for producing a reference beam (RS), in particular a laser source,
   • means for directing the reference beam (RS) along a defined reference path (RP), it being possible to detect as reference line at least a part of the reference path (RP) upon traversal of said part through the human eye and/or detectors,

• an electronic distance-measuring unit

- for emitting a measuring beam parallel to or coaxial with the reference beam (RS) in such a way that the measuring beam and the reference beam (RS) can be directed along the reference path (RP) with the aid of the means for directing, or for controlling the reference beam (RS) as measuring beam, and

- having a receiver (6) for receiving components of the measuring beam which are retroreflected by a surface (OF), and

- having an evaluation unit (9) for determining distances ($D_i$) from points ($P_i$) in the reference path (RP), at which the measuring beam is retroreflected by the surface (OF), the reference path (RP) including at least one point ($P_i$) which with traversal of the reference path (RP) can be measured in order to determine the distance ($D_i$) thereof with the aid of a distance-related variable ($D_{ij}$),

**characterized in that**
the means for directing can be driven so that there is automatically a repeated, in particular multiply repeated, traversal of the reference path (RP) by the reference beam (RS) and the measuring beam or the reference beam (RS) controlled as measuring beam, and the distance-measuring unit is designed to detect a distance-related variable ($D_{ij}$) in the form of a transit time or a phase of the measuring beam for the at least one point ($P_i$) with each traversal of the reference path (RP).

9. Reference line projecting device (1) according to Claim 8, **characterized in that** the evaluation unit (9) has a circuit which, upon repeated traversal of the reference path (RP), accumulates components of the measuring beam received for the at least one point ($P_i$) and/or aggregates assigned signals.

10. Reference line projecting device (1) according to either of Claims 8 and 9, **characterized in that** the distance-measuring unit has a measuring rate of at least 1 kHz.

11. Reference line projecting device (1) according to one of Claims 8 to 10, **characterized by** means (4a) for determining emission angles ($\alpha$, $\alpha_1$, $\gamma$) of the measuring beam (MS).

12. Reference line projecting device (1) according to one of Claims 8 to 11, **characterized in that** the means for directing have a beam deflecting means (3, 3') that can be moved by an angle ($\gamma$) while, particularly given provision of means (4a) for determining the emission angles ($\alpha$, $\alpha_1$, $\gamma$) according to Claim 11, said means (4a) can determine, in particular measure, positions of the beam deflection means (3, 3').

13. Reference line projecting device (1) according to one of Claims 8 to 12, **characterized in that** the reference path (RP) lies in a plane, and the means for directing have the effect that the measuring beam can be rotated about an axis (A) which can be aligned in particular with the aid of inclination sensors (11), particularly at a defined angular velocity of at least $4\pi$ rad/s.

14. Reference line projecting device (1) according to one of Claims 8 to 13, **characterized in that** the distance-measuring unit has a transmitting beam path (7) between the beam source (5) and the means for directing, as well as a receiving beam path between the means for directing and the receiver (6), the transmitting beam path (7) and the receiving beam path (8) being arranged partially coaxial with or parallel to the axis (A), in particular a part of the measuring beam emitted by the beam source (5) being directed onto the receiver (6) inside the device without leaving the device (1).

15. Measuring system having a reference line projecting device (1) according to one of Claims 8 to 14, and a marker unit (12, 13), which can be positioned independently and, in particular, having means for distance measuring, for marking a point ($P_i$) of the reference path (RP), the marker unit (12, 13) having a reflecting element (12a, 13a), in particular the reference line projecting device (1) and the marker unit (12, 13) having communication means for producing an at least one-way, in particular two-way communication link.

**Revendications**

1. Procédé de mesure de distance pour un appareil (1) projetant des lignes de référence, avec un télémètre électro-optique et les étapes consistant à :

• envoyer et guider un rayon de référence (RS) optique le long d'un chemin de référence (RP) défini, en particulier d'un chemin de référence (RP) défini et pouvant être spécifié de manière variable, au moins une partie du chemin de référence (RP), lors de son parcours, étant susceptible d'être appréhendé par l'oeil humain et/ou des détecteurs en tant que ligne de référence,
• mesurer la distance d'éloignement par rapport à au moins un point ($P_i$) du chemin de référence (RP), en particulier par rapport à une pluralité de points ($P_i$), par

■ envoi d'un rayon de mesure, parallèle ou coaxial au rayon de référence (RS), et guidage du rayon de mesure le long du chemin de référence (RP), ou utilisation du rayon de référence (RS) comme rayon de mesure,
■ réception de fractions du rayon de mesure réfléchi par le au moins un point ($P_i$) et déduction d'au moins un signal à partir de ces fractions, et
■ détermination de la distance ($D_i$) par rapport au au moins un point ($P_i$) à partir du au moins un signal, en particulier les signaux étant enregistrés avec une cadence de mesure d'au moins 1 kHz,

**caractérisé en ce que**
le guidage du rayon de mesure et de référence (RS), ou du rayon de référence (RS) utilisé comme rayon de mesure, le long du chemin de référence (RP) est répété automatiquement au moins une fois, en particulier est répété plusieurs fois, et, à chaque parcours du chemin de référence (RP) pour le au moins un point ($P_i$), chaque fois une grandeur ($D_{ij}$) se référant à la distance, sous la forme d'un temps de parcours ou d'une phase du rayon de mesure, est déterminée.

2. Procédé de mesure de distance selon la revendication 1,
**caractérisé en ce que**,
du fait du parcours répété du chemin de référence (RP), les fractions, reçues pour le au moins un point ($P_i$), du rayon de mesure sont accumulées et/ou leur signaux associés sont agrégés.

3. Procédé de mesure de distance selon l'une des revendications 1 ou 2,
**caractérisé en ce que**
le guidage le long du chemin de référence (RP) s'effectue à une vitesse telle que, pendant le parcours, le chemin de référence (RP) est simultanément perceptible dans sa totalité pour l'oeil humain.

4. Procédé de mesure de distance selon l'une des revendications précédentes,
**caractérisé en ce qu'**
au moins un angle d'inclinaison ($\beta_1$, $\beta_2$) par rapport à la direction verticale est appréhendé.

5. Procédé de mesure de distance selon l'une des revendications précédentes,
**caractérisé en ce que**
le rayon de mesure optique tourne autour d'un axe (A) orientable par rapport à la verticale et définit un plan, en particulier utilisé comme référence de hauteur, en particulier avec une vitesse angulaire définie, d'au moins $4\pi$ rad/s, spécialement l'angle ($\alpha_i$), afférent à l'axe (A), par rapport au au moins un point ($P_i$) étant déterminé.

6. Procédé de mesure de distance selon l'une des revendications précédentes,
**caractérisé en ce que**,
lors de la détermination de la distance ($D_i$) par rapport au au moins un point ($P_i$), sa position relative dans le chemin de référence (RP) est déterminée.

7. Procédé de mesure de distance selon la revendication 6,
**caractérisé en ce que**
les coordonnées des points ($P_i$) sur le chemin de référence (RP) sont déterminées à l'aide de l'angle ($\alpha_i$), afférent à l'axe (A), et de l'angle d'inclinaison ($\beta_1$, $\beta_2$) par rapport à la direction verticale, en particulier dans un système de coordonnées extérieur.

8. Appareil (1) projetant des lignes de référence, avec

• une source de rayonnement (5), pour produire un rayon de référence (RS), en particulier une source laser,
• des moyens pour diriger le rayon de référence (RS) le long d'un chemin de référence (RP) défini, sachant qu'au moins une partie du chemin de référence (PA), lors de son parcours, est susceptible d'être appréhendée en tant que ligne de référence par l'oeil humain et/ou des détecteurs,
• une unité de mesure de distance électronique,

- pour l'émission d'un rayon de mesure parallèle ou coaxial au rayon de référence (RS), de manière que le rayon de mesure et le rayon de référence (RS), de manière que le rayon de mesure et le rayon de référence RS) soit susceptibles d'être dirigés le long du chemin de référence (RP) à l'aide des moyens pour diriger, ou pour commander le rayon de référence (RS) en tant que rayon de mesure, et
- avec un récepteur (6), pour la réception de fractions du rayon de mesure, réfléchie par une surface (OF), et
- avec une unité d'évaluation (9), pour la détermination de distances ($D_i$) par rapport à des points ($P_i$), dans le chemin de référence (RP), auxquels le rayon de mesure est réfléchi par la surface (OF), le chemin de référence (RP) contenant au moins un point ($P_i$) qui est susceptible d'être mesuré à l'aide d'une grandeur ($D_{ij}$) se référant à une distance, lors du parcours du chemin de référence (RP) pour la détermination de sa distance (Di),

**caractérisé en ce que**
les moyens pour diriger sont susceptibles d'être commandés de manière qu'automatiquement un parcours répété, en particulier répété plusieurs fois, du chemin de référence (RP) avec le rayon de référence (RS) et le rayon de mesure, ou le rayon de référence (RS) commandé en tant que rayon de mesure, s'effectue, et l'unité de mesure de distance étant réalisée pour appréhender une grandeur ($D_{ij}$) se référant à une distance, sous la forme d'un temps de parcours ou d'une phase du rayon de mesure pour le au moins un point ($P_i$) à chaque parcours du chemin de référence (RP).

9. Appareil (1) projetant des lignes de référence selon la revendication 8,
**caractérisé en ce que**
l'unité d'évaluation (9) présente un circuit qui, lors du parcours répété du chemin de référence (RP) pour le au moins un point ($P_i$), accumule des fractions reçues du rayon de mesure et/ou agrège des signaux associés.

10. Appareil (1) projetant des lignes de référence selon l'une des revendications 8 ou 9,
**caractérisé en ce que**
l'unité de mesure de distance présente une cadence de mesure d'au moins 1 kHz.

11. Appareil (1) projetant des lignes de référence selon l'une des revendications 8 à 10,
**caractérisé par**
des moyens (4a) pour déterminer des angles d'émission ($\alpha$, $\alpha_1$, $\gamma$) du rayon de mesure (MS).

12. Appareil (1) projetant des lignes de référence selon l'une des revendications 8 à 11,
**caractérisé en ce que**
les moyens pour diriger présentent un moyen de déviation de rayon (3, 3'), déplaçables de la valeur d'un angle ($\gamma$), en particulier sachant que,

- pour le cas, dans lequel des moyens (4a) pour déterminer les angles d'émission ($\alpha$, $\alpha_1$, $\gamma$) selon la revendication 11 sont prévus - à l'aide de ces moyens (4a), des positions du moyen de déviation de rayon (3, 3') sont susceptibles d'être déterminées, en particulier d'être mesurées.

13. Appareil (1) projetant des lignes de référence selon l'une des revendications 8 à 12,
**caractérisé en ce que**
le chemin de référence (RP) est situé dans un plan et les moyens pour diriger font que le rayon de mesure est susceptible de tourner autour d'un axe (A), en particulier orientable à l'aide de capteurs d'inclinaison (11), en particulier avec une vitesse angulaire définie, d'au moins $4\pi$ rad/s.

14. Appareil (1) projetant des lignes de référence selon l'une des revendications 8 à 13,
**caractérisé en ce que**
l'unité de mesure de distance présente un chemin de rayon d'émission (7), entre la source de rayons (5) et les moyens pour diriger, ainsi qu'un chemin de rayon de réception, entre les moyens pour diriger et le récepteur (6), le chemin de rayon d'émission (7) et le chemin de rayon de réception (8) étant disposé partiellement coaxialement ou parallèlement à l'axe (A), en particulier une partie du rayon de mesure envoyé par la source de rayon (5) est dirigée sur le récepteur (6), de manière interne à l'appareil, sans quitter l'appareil (1).

15. Système pour mesurage, avec un appareil (1) projetant des lignes de référence selon l'une des revendications 8 à 14 et une unité de marquage (12, 13) positionnable indépendamment, en particulier avec des moyens pour la mesure de distance, pour identifier un point ($P_i$) du chemin de référence (RP), l'unité de marquage (12, 13) présentant un élément (12a, 13a) réfléchissant,
en particulier l'appareil (1) projetant des lignes de référence et l'unité de marquage (12, 13) présentant des moyens de communication, pour établir une liaison de communication au moins unidirectionnelle, en particulier bidirectionnelle.

RP

OF

1

A

2

3

4

RS

$D_i$

$P_i$

Fig. 1

A2

RS

A3

$\alpha_i$

1

BR

A1

$\mathfrak{Fig}$. 2

$B_{Tür}$

S

$D_i$

t

$\mathfrak{Fig}$. 3

$\mathcal{F}$ig. 4

$\mathcal{F}$ig.5

Fig. 6

*Fig.* 7

*Fig.* 8

$\mathcal{F}ig.$ 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070044331 A1
- US 20060044570 A1
- EP 2007007058 W
- EP 1001251 A
- US 5629756 A
- WO 9617222 A
- EP 1024343 A
- EP 2007006226 W
- EP 07114572 A